# EUROPEAN PATENT APPLICATION

(11) **EP 1 912 458 A1**
(43) Date of publication of application: **16.04.2008**
(21) Application number: 05768933.3
(22) Date of filing: 04.08.2005
(51) Int. Cl.: H04Q 7/38

(54) **MOBILE COMMUNICATION SYSTEM, BASE STATION CONTROL APPARATUS, AND MOBILE TERMINAL**

(71) Applicant: MITSUBISHI DENKI KABUSHIKI KAISHA, Chiyoda-ku, Tokyo 100-8310 (JP)
(72) Inventor: WAKABAYASHI, Hideji, MITSUBISHI DENKI KABUSHIKIK., Tokyo 100-8310 (JP); MAEDA, Miho, MITSUBISHI DENKI KABUSHIKI KAISHA, Tokyo 100-8310 (JP)
(74) Representative: Sajda, Wolf E.
(86) International application number: PCT/JP2005/014328
(87) International publication number: WO 2007/015304

(57) **Abstract**

A mobile communication system is constructed in such a manner that a plurality of possible values for a maximum number of non-serving base stations which can be selected by a base station control apparatus (25) are made available, and the maximum number is set up among the plurality of possible values for the maximum number of non-serving base station made available according to the capability of mobile terminal (21). Thereby, in a case in which the mobile terminal (21) is a mobile terminal (B) with a low transmission rate, an advantage of being able to reduce the circuit size of the receiving circuit of the mobile terminal (21) is acquired.

## Description

### Field of the Invention

The present invention relates to a mobile terminal which transmits data, a base station control apparatus which selects from a plurality of base stations which carry out macro diversity reception of data transmitted from the mobile terminal, a non-serving base station having a control function of controlling the power for transmission of data in the mobile terminal and a mobile communication system which comprises the base station control apparatus and so on.

### Background of the Invention

A mobile terminal for use in a conventional mobile communication system is so constructed as to, as soon as data arrives thereat, transmit the data to a base station.
More specifically, in a conventional mobile communication system, each mobile terminal in a cell is allowed to transmit data arbitrarily.
However, recent years have seen increase in the interference amount in a base station because the power of transmission of data in each mobile terminal becomes large with increase in the speed of the transmission data.
As a result, in a case in which each mobile terminal performs data transmission arbitrarily, the interference amount in a base station may exceed a maximum permissible amount and may make it impossible for communication to be carried out.

To solve this problem, in a mobile communication system which carries out high-speed packet communication, a scheduler is mounted in a base station, and the transmission rate, the transmission power, and so on of each mobile terminal are controlled by the scheduler so that the power simultaneously transmitted from mobile terminals does not exceed an upper limit.
More specifically, the scheduler of a base station brings the interference amount of the base station caused by the data transmission of each mobile terminal close to its maximum permissible amount within the limits by controlling the transmission rate, the transmission power, and so on of each mobile terminal in consideration of the interference amount of the base station.
As a result, because the radio resources can be used effectively, the number of mobile terminals which can be accommodated in the cell and the throughput of the mobile communication system can be improved.

In the conventional mobile communication system, because any base station cannot control the amount of interference therein and therefore data may be simultaneously transmitted at a high-speed rate thereto from each mobile terminal, the maximum transmission rate is restricted with a certain amount of margin being allowed for by assuming that such a status may occur. However, if the above-mentioned scheduler can control the amount of interference of the base station certainly, the margin can be reduced so that the transmission peak rate of each mobile terminal can be increased.

In uplink transmission of data, data transmitted from a mobile terminal can reach a plurality of base stations, and another base station other than a base station which takes charge of the scheduling is able to receive the data.
A plurality of base stations' process of receiving data transmitted from a mobile terminal so as to improve the reception quality is called macro diversity, and, in a case in which a plurality of base stations which receive data transmitted from one mobile terminal exist, a base station which takes charge of the scheduling process for the mobile terminal is called a primary (Primary) base station or a serving (Serving) base station.

On the other hand, a base station which does not take charge of the scheduling process and which only receives data transmitted from a mobile terminal is called a non-serving base station, and a set of a plurality of base stations which communicate with a certain mobile terminal is called an active set.
However, even a non-serving base station mounts a scheduler therein because, even if the base station serves as a non-serving base station with respect to a certain mobile terminal, the base station needs to carry out the scheduling process for another mobile terminal. A serving base station and a non-serving base station can be distinguished from each other according to whether they take charge of scheduling for a certain mobile terminal.

Conventionally, also in uplink transmission of data, macro diversity is carried out during a software handover and all base stations which are included in the active set are allowed to receive data via a radio link during the software handover.
However, in a high-speed packet communication system in which a scheduler is introduced into each base station, while its aim is to cover a high error rate with control of retransmission of data to base stations by lowering the power of transmission of data, each mobile terminal is made to increase its power of transmission of data excessively to transmit data so that all base stations can receive the data.
In contrast, in a case in which only a serving base station which serves as a scheduler can be made to receive data from mobile terminals, if the quality of a transmission line via which the data are transmitted is changed and the transmission line quality degrades, the process of retransmitting the data will occur many times and the throughput will degrade.

Also in a mobile communication system which is constructed in consideration of the above-mentioned problem, a scheduler can grasp the amount of interference of a base station in which the scheduler itself is mounted, but cannot immediately grasp the amount of interference of any other base station in which the scheduler itself is not mounted.
Therefore, there can be a case in which even if the amount of interference caused by data transmission by a specific mobile terminal falls within a permissible range with respect to the base station in which the scheduler itself is mounted, whereas the amount of interference exceeds the permissible range with respect to another base station in which the scheduler itself is not mounted.
It is therefore desirable that any non-serving base station which does not take charge of the scheduling process also has a function of controlling the power of transmission of data in a mobile terminal.

As the function of controlling the power of transmission of data in a mobile terminal, there is provided a non-serving base station's function of controlling the power of transmission of data in a mobile terminal by transmitting a Down command for making a request to lower the transmission rate to the mobile terminal (the non-serving base station transmits the Down command using an E-RGCH (E-DCH Relative Grant Channel)) (see the following Nonpatent Reference 1).
Thereby, a non-serving base station in which the amount of interference exceeds its permissible amount can control the power of transmission of data transmitted from a mobile terminal so as to suppress the degradation in the transmission quality.

Concretely, this processing is carried out as follows.
For example, a mobile communication system in which a mobile terminal A with a high transmission rate, a mobile terminal B with a low transmission rate, a serving base station SB which carries out scheduling for the mobile terminals A and B, and a non-serving base station NSB that does not carry out any scheduling for the mobile terminals A and B exist will be examined hereafter.
The serving base station SB can maintain the interference margin at a sufficient level by carrying out scheduling for the mobile terminal A with a high transmission rate and large transmission power.

In contrast, because the non-serving base station NSB does not carry out any scheduling for the mobile terminal A, the non-serving base station cannot maintain the interference margin at a sufficient level at the current transmission rate of the mobile terminal A (with the transmission power).
In such a case, the non-serving base station NSB lowers the transmission power of the mobile terminal A by transmitting a Down command to the mobile terminal A so as to maintain the interference margin at a sufficient level.
Because the transmission power of the mobile terminal B with a low transmission rate is small, also in the non-serving base station NSB which does not carry out any scheduling for the mobile terminal B, the increase in the amount of interference due to the power of data transmitted from the mobile terminal B is reduced.

For example, a case in which in the mobile communication system, a maximum number of base stations in the E-DCH active set (i.e., a maximum number of serving base stations SB + non-serving base stations NSB) is set to "5" will be examined.
Generally, the number of serving base stations SB which carry out scheduling for mobile terminals is one with respect to one mobile terminal.
In this case, up to four non-serving base stations NSB exist in the mobile communication system in addition to serving base stations SB.
A serving base station SB in the mobile communication system carries out scheduling for a mobile terminal A with a high transmission rate and large transmission power so as to maintain the interference margin at a sufficient level.
In contrast, each of the four non-serving base stations NSB in the mobile communication system lowers the transmission power of the mobile terminal A so as to maintain the interference margin at a sufficient level by transmitting the Down command to the mobile terminal A.

Therefore, in each of the mobile terminals A and B in the mobile communication system, a receiving circuit has to be constructed in such a manner as to receive the Down command from any base station in the E-DCH active set. More specifically, a receiving circuit which can accommodate five E-RGCHs which the one set of serving base station SB and the four sets of non-serving base stations NSB use has to be constructed.
Although the receiving circuit of each of the mobile terminals A and B has to be constructed in such a manner as to include receiving parts corresponding to the maximum number of base stations in the E-DCH active set, the mobile terminal B has a low transmission rate, and therefore, even if the mobile terminal B transmits data, there is little influence on the interference margin of each non-serving base station NSB.
Therefore, it is actually rare that the non-serving base station NSB transmits the Down command to the mobile terminal B, and there is a little necessity to construct the receiving circuit of the mobile terminal B on the same scale as that of the mobile terminal A. The receiving circuit of each of the mobile terminals A and B will be explained in full detail in the chapter of Embodiments mentioned below.

A software handover technology without using any scheduler has been known conventionally. For example, optimization of the number of base stations in the active set is disclosed by the following Patent Reference 1.
This Patent Reference 1 discloses a method of a mobile terminal carrying out radio communication with a base station to measure a signal strength, RF performance, or the like to adjust the number of base stations in the active set according to two thresholds (if the measured quantity is larger than the first threshold, the number of base stations in the active set is set to one, whereas if the measured quantity is larger than the second threshold, the number of base stations in the active set is set to two, where the first threshold > the second threshold).
However, Patent Reference 1 only discloses the method of simply measuring the signal strength, the RF performance, or the like for the purpose of economization of the radio resources so as to restrict the number of base stations in the active set, but does not disclose any reduction of the scale of the receiving circuit of a mobile terminal.

A technology for introducing a scheduler for high-speed packet communication is disclosed by the following Patent Reference 2.
This Patent Reference 2 discloses a method of carrying out efficient E-DCH (Enhanced DCH) scheduling when a mobile terminal existing in a soft handover region receives different scheduling instructions from a plurality of base stations.
However, Patent Reference 2 does not disclose any reduction of the scale of the receiving circuit of the mobile terminal.

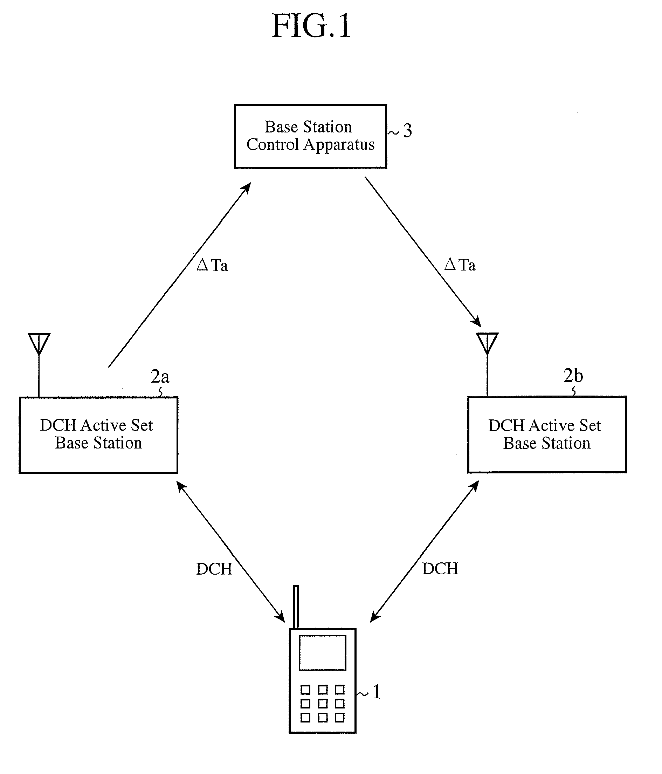

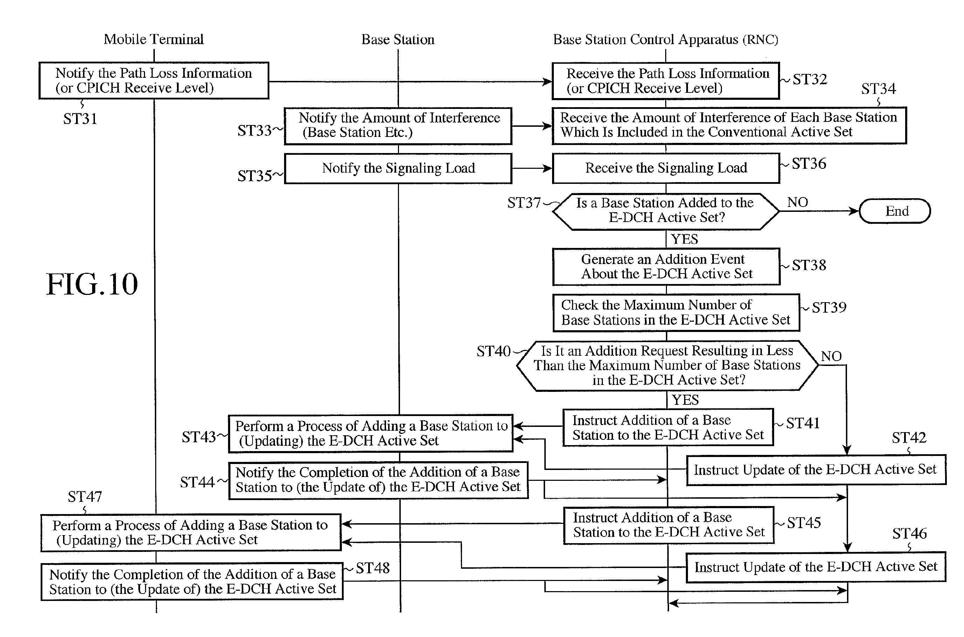

- Patent reference 1:: JP-A-2002-095 0.31
(see paragraph numbers [0010] to [0017] and Fig. 1)
- Patent reference 2:: JP-A-2004-248 300
(see paragraph numbers [0070] to [0090] and Fig. 10)
- Nonpatent reference 1:: 3GPP TS 2.5.309 V6.3.0 (200.5-06).

Because the conventional mobile communication system is constructed as mentioned above, even a non-serving base station NSB which does not carry out any scheduling for the mobile terminals A and B can lower the transmission power of the mobile terminal A with a high transmission rate and maintain the interference margin at a sufficient level by transmitting the Down command to the mobile terminal A. A problem is, however, that because even when the mobile terminals A and B having different data transmission capabilities coexist, only one maximum number of base stations in the E-DCH active set (a maximum number of serving base stations SB+ non-serving base stations NSB) is decided within the system, the mobile terminal B (a mobile terminal with a low transmission rate) with a low possibility of receiving the Down command from a non-serving base station NSB actually has a receiving circuit with the same scale as that of the mobile terminal A.

The present invention is made in order to solve the above-mentioned problem, and it is therefore an object of the present invention to provide a mobile communication system and a base station control apparatus which can reduce the circuit size of the receiving circuit of a mobile terminal with a low maximum transmission rate.
It is another object of the present invention to provide a mobile terminal which can reduce the circuit size of a receiving circuit thereof.

### Disclosure of the Invention

In accordance with the present invention, there is provided a mobile communication system in which a maximum number of non-serving base stations which can be selected by a base station control apparatus is set up according to the capability of a mobile terminal.

As a result, there is provided such an advantage as reduction in the circuit size of the receiving circuit of a mobile terminal with a low transmission rate.

### Brief Description of the Figures

- Fig. 1: is a block diagram showing a mobile communication system in a case in which a mobile terminal receives DCH data from a plurality of DCH active set base stations;
- Fig. 2: is a block diagram showing a mobile communication system in a case in which a mobile terminal receives E-RGCH data from E-DCH active set base stations;
- Fig. 3: is a block diagram showing a demodulating unit in the mobile terminal;
- Fig. 4: is a conceptual diagram showing an amount of interference and an interference margin of a base station;
- Fig. 5: is a block diagram showing a mobile communication system in accordance with Embodiment 1 of the present invention;
- Fig. 6: is a block diagram showing a mobile terminal in accordance with Embodiment 1 of the present invention;
- Fig. 7: is a block diagram showing a base station control apparatus in accordance with Embodiment 1 of the present invention;
- Fig. 8: is a sequence diagram showing a procedure of a mobile terminal informing a base station control apparatus of a maximum number of base stations in the E-DCH active set or Capabilities information;
- Fig. 9: is a sequence diagram in a case in which the mobile terminal performs a process of adding a base station to (or updating) the E-DCH active set;
- Fig. 10: is a sequence diagram in a case in which the base station control apparatus performs a process of adding a base station to (or updating) the E-DCH active set;
- Fig. 11: is an explanatory drawing showing the capability of the mobile terminal about E-DCH (UE Capabilities) which is standardized by the technical specification of 3GPP;
- Fig. 12: is an explanatory drawing showing an example of a correspondence between the Capabilities information and the maximum number of base stations in the E-DCH active set;
- Fig. 13: is a detailed block diagram showing a modulating unit of the mobile terminal at a time of a multicode; and
- Fig. 14: is an explanatory drawing showing a Capabilities estimation table about an E-DCH when the mobile communication system makes available a plurality of possible values of the maximum number of base stations in the E-DCH active set.

### Preferred Embodiments of the Invention

Hereafter, in order to explain this invention in greater detail, the preferred embodiments of the present invention will be described with reference to the accompanying drawings.

### Embodiment 1

Fig. 1 is a block diagram showing a mobile communication system in a case in which a moving terminal receives DCH data (a DCH stands for a "Dedicated Channel", and the DCH is a channel via which data are individually exchanged and, mainly, data with a relatively low rate, such as sound data, are handled) from base stations in a DCH active set.
In this case, DCH active set base stations denote a plurality of base stations which carry out macro diversity reception of DCH data from the mobile terminal in order to carry out a soft handover.

The mobile communication system of Fig. 1 is disclosed by the technical specification (3GPP R'99) of 3GPP which is a nonpatent reference. The mobile terminal 1 (User Equipment :UE) receives DCH data from the plurality of DCH active set base stations 2a and 2b in order to carry out a soft handover, though the DCH data transmitted from the plurality of DCH active set base stations 2a and 2b are identical data. Each of the DCH active set base stations (DCH active set Node Bs) 2a and 2b adjusts the transmission timing of the DCH data at the time when the DCH data reach the mobile terminal 1. As a result, soft-combining can be implemented, and a RAKE combining unit or the like can be constructed of one system.

Hereafter, a method of adjusting the transmission timing of DCH data by each of the DCH active set base stations 2a and 2b will be explained.
In Fig. 1, for the sake of simplicity, the example in which the two DCH active set base stations 2a and 2b which are base stations used for DCH soft handover are provided is shown. However, in actual fact, up to six DCH active set base stations can be provided for each mobile terminal 1.

In W-CDMA systems, base stations are working together in an asynchronous mode.
More specifically, DCH data transmitted and received between the DCH active set base station 2a and the mobile terminal 1 are transmitted at a timing which is delayed from the reference timing of the DCH active set base station 2a (e.g., the reference timing of a CPICH (Common Pilot Channel) which is a common pilot channel) by a delay ΔTa (the delay ΔTa is decided for each individual mobile terminal 1).

For example, in a case in which the mobile terminal 1 receives DCH data from the plurality of DCH active set base stations 2a and 2b at the time of a soft handover, the DCH active set base station 2a reports in advance, for example, the transmission timing of the CPICH and the delay ΔTa of the DCH active set base station 2a, to the base station control apparatus 3 (Radio Network Controller: RNC) in advance.
When the base station control apparatus 3 receives the transmission timing of the CPICH and the delay ΔTa which are reported thereto from the DCH active set base station 2a, the base station control apparatus notifies the transmission timing of the CPICH and the delay ΔTa to the DCH active set base station 2b which has become a soft handover destination (target NodeB).
When the DCH active set base station 2b receives the notification of the transmission timing of the CPICH and the delay ΔTa from the base station control apparatus 3, the DCH active set base station 2b refers to the transmission timing of the CPICH and the delay ΔTa, determines a delay ΔTb to be decided for each individual mobile terminal 1 in such a manner that the DCH data transmitted from the DCH active set base station 2a and the DCH data transmitted from the DCH active set base station 2b are received at the same timing as much as possible by the mobile terminal 1, and transmits the DCH data at a timing of which the delay amount ΔTb is delayed from the reference timing of the DCH active set base station 2b.
Thereby, even in a case in which the plurality of DCH active set base stations 2a and 2b transmit DCH data to the mobile terminal 1, for moments when the mobile terminal receives the DCH data, a structure, such as the RAKE combining, at the DCH demodulating unit of mobile terminal can be constructed of system.

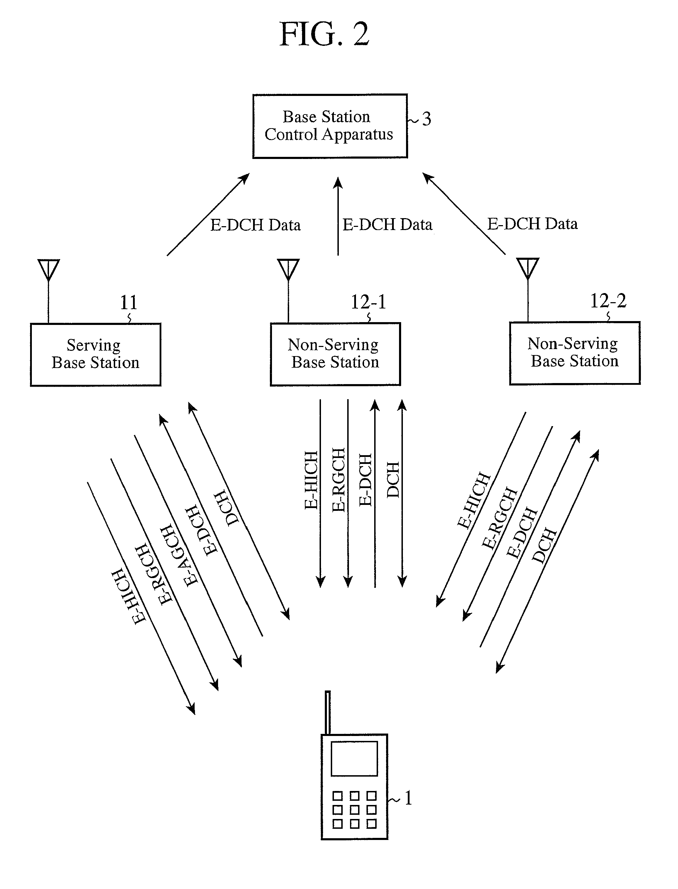

Fig. 2 is a block diagram showing a mobile communication system in a case in which a mobile terminal receives E-RGCH data from an E-DCH active set base station.
The term E-RGCH stands for "E-DCH Relative Grant Channel", the E-RGCH is a downlink channel via which a request (a Down command) to lower the transmission rate of uplink high-speed packets (E-DCH), and E-RGCH data are transmitted from non-serving base stations 12-1 and 12-2 to a mobile terminal 1.
E-RGCH data are also transmitted from a serving base station 11 to the mobile terminal 1.

The serving base station 11 is a base station which takes charge of a scheduling process for the mobile terminal 1, and which prevents by controlling the transmission rate, the transmission power, and so on of the mobile terminal 1, the power simultaneously transmitted from a plurality of mobile terminals 1 from exceeding a threshold. In Fig. 2, although only one mobile terminal 1 is illustrated, usually, a plurality of mobile terminals 1 exists.
Each of the non-serving base stations 12-1 and 12-2 is a base station which does not take charge of any scheduling process, but includes a function of controlling the power of transmission of data by each mobile terminal 1, by transmitting a Down command for making a request to lower the transmission rate to each mobile terminal 1.

In the example of Fig. 2, no base stations corresponding to the DCH active set base stations 2a and 2b of Fig. 1 are illustrated, though the serving base station 11 and the non-serving base stations 12-1 and 12-2 correspond to base stations in the DCH active set which carry out macro diversity reception of data transmitted from each mobile terminal 1, i.e., the DCH active set base stations 2a and 2b shown in Fig. 1. In other words, each DCH active set base station can be the serving base station 11 or one of the non-serving base stations 12-1 and 12-2.

An E-DCH (Enhanced DCH) is a data channel via which uplink high-speed packet communication is carried out.
An E-AGCH (E-DCH Absolute Grant Channel) is a downlink channel via which the transmission rate of uplink high-speed packets (E-DCH) is determined, and E-AGCH data are transmitted from the serving base station 11 to the mobile terminal 1.
An E-HICH (E-DCH Hybrid ARQ Indicator Channel) is a channel via which an ACK/NACK signal is transmitted for notifying success or failure of E-DCH reception in each of the serving base station 11 and the non-serving base stations 12-1 and 12-2.
E-DCH data which are macro-diversity-received by each of the serving base station 11 and the non-serving base stations 12-1 and 12-2 are transmitted to the base station control apparatus 3.

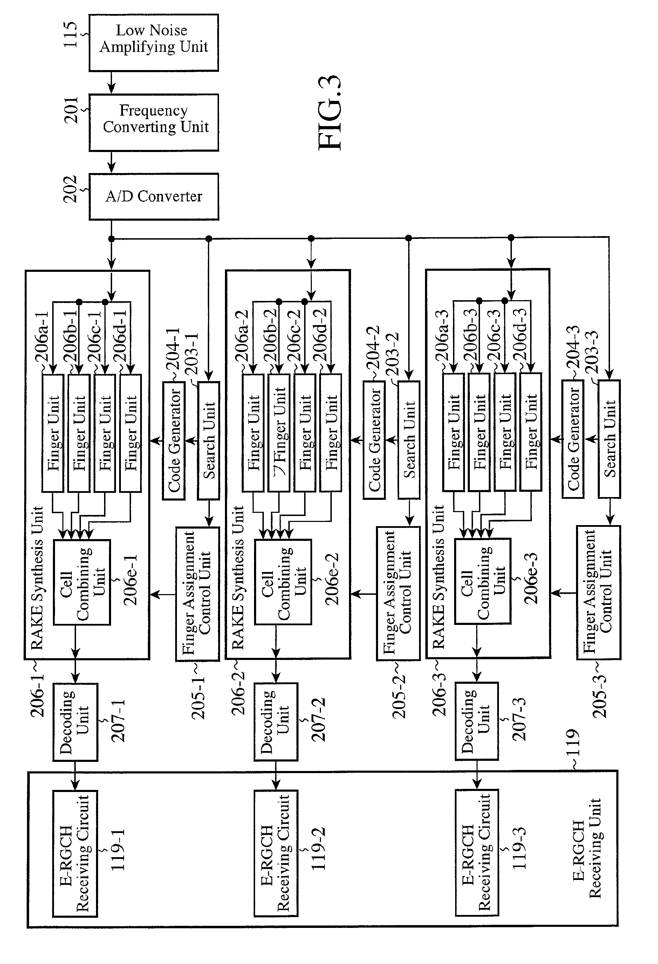

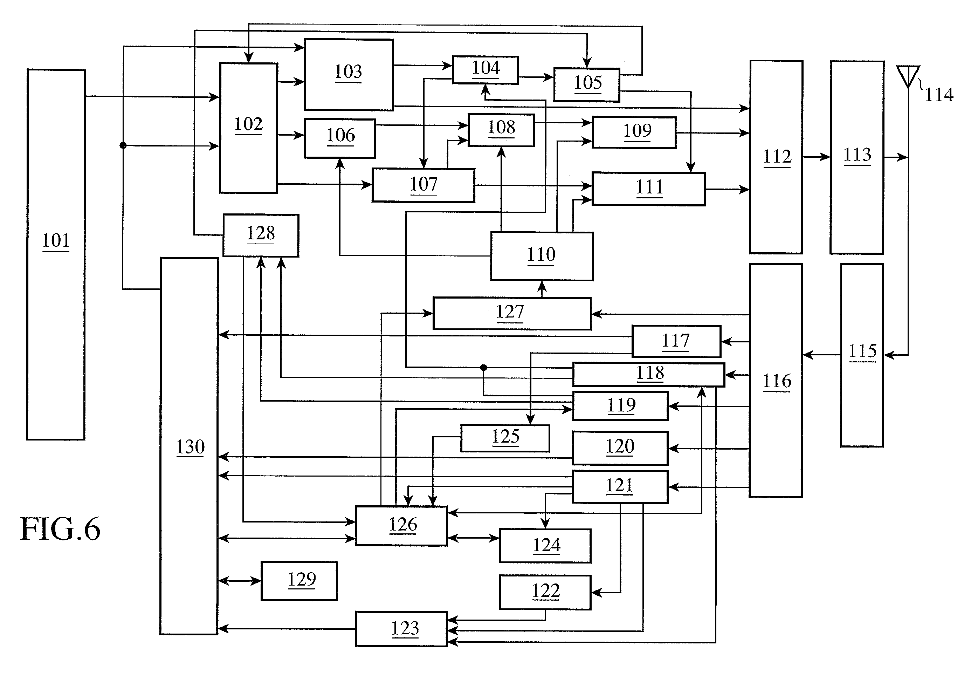

Fig. 3 is a block diagram showing a demodulating unit of the mobile terminal 1. The whole configuration of the mobile terminal 1 shown in Fig. 6 will be explained below.
In Fig. 3, when a low noise amplifying unit 115 of Fig. 6 amplifies an RF signal (Radio Frequency) including a multipath signal which is a weak radio signal received by an antenna 114, a frequency converting unit 201 converts the frequency of the RF signal and outputs the frequency-converted signal.
An A/D converter 202 converts the frequency-converted signal output from the frequency converting unit 201 which is an analog signal into a digital signal.

In a case in which reception of E-RGCH data transmitted from the serving base station 11 is assigned to a search unit 203-1, the search unit 203-1, when receiving the digital signal from the A/D converter 202, carries out cell search processing so as to detect the serving base station 11 which is the base station of the transmit source of the multipath signal.
A code generator 204-1 generates a scrambling code corresponding to the serving base station 11 detected by the search unit 203-1.

A finger assignment control unit 205-1 controls a RAKE combining unit 206-1 in such a manner that a digital signal associated with a first multipath signal transmitted from the serving base station 11 (referred to as a digital signal A-1 from here on) is assigned to a finger unit 206a-1 and a digital signal associated with a second multipath signal (referred to as a digital signal A-2 from here on) is assigned to a finger unit 206b-1.
In this case, for the sake of simplicity, although no digital signals are assigned to finger units 206c-1 and 206d-1, it is needless to say that a digital signal associated with a third multipath signal can be assigned to the finger unit 206c-1 and a digital signal associated with a fourth multipath signal can be assigned to the finger unit 206d-1.

In a case in which reception of E-RGCH data transmitted from the non-serving base station 12-1 is assigned to a search unit 203-2, the search unit 203-2, when receiving the digital signal from the A/D converter 202, carries out cell search processing so as to detect the non-serving base station 12-1 which is the base station of the transmit source of the multipath signal.
A code generator 204-2 generates a scrambling code corresponding to the non-serving base station 12-1 detected by the search unit 203-2.

A finger assignment control unit 205-2 controls a RAKE combining unit 206-2 in such a manner that a digital signal associated with a first multipath signal transmitted from the non-serving base station 12-1 (referred to as a digital signal B-1 from here on) is assigned to a finger unit 206a-2 and a digital signal associated with a second multipath signal (referred to as a digital signal B-2 from here on) is assigned to a finger unit 206b-2.
In this case, for the sake of simplicity, although no digital signals are assigned to finger units 206c-2 and 206d-2, it is needless to say that a digital signal associated with a third multipath signal can be assigned to the finger unit 206c-2 and a digital signal associated with a fourth multipath signal can be assigned to the finger unit 206d-2.

In a case in which reception of E-RGCH data transmitted from the non-serving base station 12-2 is assigned to a search unit 203-3, the search unit 203-3, when receiving the digital signal from the A/D converter 202, carries out cell search processing so as to detect the non-serving base station 12-2 which is the base station of the transmit source of the multipath signal.
A code generator 204-3 generates a scrambling code corresponding to the non-serving base station 12-2 detected by the search unit 203-3.

A finger assignment control unit 205-3 controls a RAKE combining unit 206-3 in such a manner that a digital signal associated with a first multipath signal transmitted from the non-serving base station 12-3 (referred to as a digital signal C-1 from here on) is assigned to a finger unit 206a-3 and a digital signal associated with a second multipath signal (referred to as a digital signal C-2 from here on) is assigned to a finger unit 206b-3.
In this case, for the sake of simplicity, although no digital signals are assigned to finger units 206c-3 and 206d-3, it is needless to say that a digital signal associated with a third multipath signal can be assigned to the finger unit 206c-3 and a digital signal associated with a fourth multipath signal can be assigned to the finger unit 206d-3.

Each of the finger units 206a-1 to 206d-1 of the RAKE combining unit 206-1 uses the scrambling code generated by the code generator 204-1 to extract the digital signal assigned thereto by the finger assignment control unit 205-1, and outputs the digital signal to a cell combining unit 206e-1.
The cell combining unit 206e-1 of the RAKE combining unit 206-1 carries out a maximum ratio combining process of maximum-ratio-combining the digital signal A-1 output from the finger unit 206a-1 and the digital signal A-2 output from the finger unit 206b-1.

Each of the finger units 206a-2 to 206d-2 of the RAKE combining unit 206-2 uses the scrambling code generated by the code generator 204-2 to extract the digital signal assigned thereto by the finger assignment control unit 205-2, and outputs the digital signal to a cell combining unit 206e-2.
The cell combining unit 206e-2 of the RAKE combining unit 206-2 carries out a maximum ratio combining process of maximum-ratio-combining the digital signal B-1 output from the finger unit 206a-2 and the digital signal B-2 output from the finger unit 206b-2.

Each of the finger units 206a-3 to 206d-3 of the RAKE combining unit 206-3 uses the scrambling code generated by the code generator 204-3 to extract the digital signal assigned thereto by the finger assignment control unit 205-3, and outputs the digital signal to a cell combining unit 206e-3.
The cell combining unit 206e-3 of the RAKE combining unit 206-3 carries out a maximum ratio combining process of maximum-ratio-combining the digital signal C-1 output from the finger unit 206a-3 and the digital signal C-2 output from the finger unit 206b-3.

A decoding unit 207-1 decodes the combined signal maximum-ratio-combined by the cell combining unit 206e-1, and outputs the decoded signal to an E-RGCH receiving circuit 119-1 of an E-RGCH receiving unit 119.
A decoding unit 207-2 decodes the combined signal maximum-ratio-combined by the cell combining unit 206e-2, and outputs the decoded signal to an E-RGCH receiving circuit 119-2 of the E-RGCH receiving unit 119.
A decoding unit 207-3 decodes the combined signal maximum-ratio-combined by the cell combining unit 206e-3, and outputs the decoded signal to an E-RGCH receiving circuit 119-3 of the E-RGCH receiving unit 119.

Hereafter, a case in which the mobile terminal 1 receives E-RGCH data from the serving base station 11 and the non-serving base stations 12-1 and 12-2 which are E-DCH active set base stations will be explained.

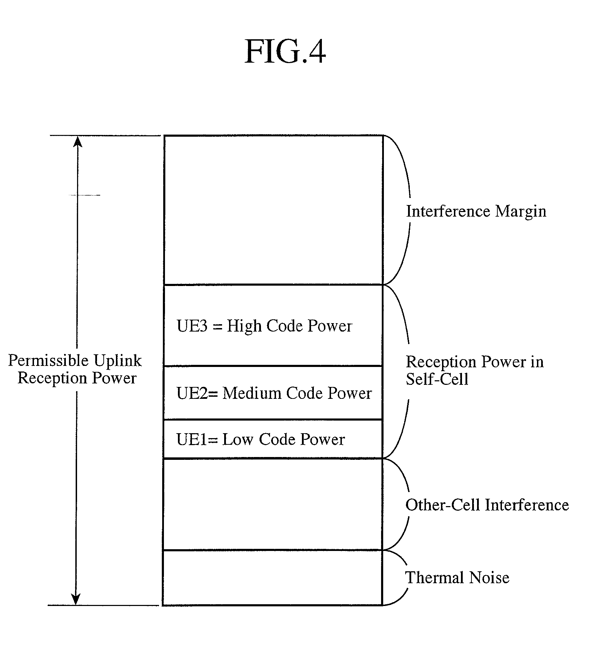

Fig. 4 is a conceptual diagram showing the amount of interference and the interference margin of a base station. A thermal noise is an unavoidable noise depending on temperature, and other-cell interference is an amount of interference from other base stations. However, each base station cannot distinguish between the thermal noise and the other-cell interference.
The interference margin is the result of subtracting the total reception power from the permissible uplink reception power.
A portion shown by each of UE1 to UE3 (UE stands for "User Equipment" and UE means a terminal) is reception power (code power) which is acquired by demodulating a signal transmitted from the mobile terminal 1 using a spread code within the self-base station.

A base station (the serving base station 11 or the non-serving base station 12-1 or 12-2) in which the amount of interference exceeds its permissible amount controls the power of transmission of data in the mobile terminal 1 by transmitting a Down command for making a request to lower the transmission rate to the mobile terminal 1 so as to ensure the interference margin.
However, in the serving base station 11 and the non-serving base stations 12-1 and 12-2, there arises a problem that a shortage of the interference margin occurs independently for each base station.
Therefore, the description of the Down command which each of the base stations (the serving base station 11 or the non-serving base station 12-1 or 12-2) in which the amount of interference exceeds its permissible amount transmits differs for each base station.
Thus, because the description of the Down command differs for each base station, soft-combining cannot be carried out and therefore a number of RAKE combining units 206 and so on are needed corresponding to the number of E-RGCHs.

The E-RGCH via which each of the serving base station 11 and the non-serving base stations 12-1 and 12-2 transmits the Down command differs from the DCH via which data, such as sound data, are handled in that the timing at which E-RGCH data reach the mobile terminal 1 is not adjusted among the serving base station 11 and the non-serving base stations 12-1 and 12-2 which are E-DCH active set base stations.
Therefore, there can be a case in which E-RGCH data transmitted from a plurality of base stations reach the mobile terminal simultaneously.
Because the mobile terminal 1 cannot control the timing at which E-RGCH data transmitted from each of the serving base station 11 and the non-serving base stations 12-1 and 12-2 reach the mobile terminal, it is difficult for even the decoding unit 207 to carry out time division processing.

In the example of Fig. 2, while the number of base stations in the E-DCH active set is three, the number of E-RGCHs via which the mobile terminal 1 must receive data increases with increase in the number of base stations in the E-DCH active set.
In the case in which the number of base stations in the E-DCH active set is three, three sets 206-1, 206-2, and 206-3 of a RAKE combining unit and so on are mounted in the demodulating unit of the mobile terminal 1 as shown in Fig. 3. However, as the number of base stations in the E-DCH active set increases, the number of the sets of a RAKE combining unit and so on increases by just that much increase in the number of base stations. More specifically, when the number of base stations in the E-DCH active set increases from 3 to 3+N, the number of the sets of a RAKE combining unit and so on increases to 3+N.

Thus, from the viewpoint of the degree of influence upon the mounting of the hardware of the mobile terminal 1, the increase in the number of base stations in the E-DCH active set has a higher degree of influence than the increase in the number of DCH active set base stations.
As a result, it is clear that even a low-capability mobile terminal with a low maximum transmission rate has a problem of requiring to mount hardware for reception of a Down command (hardware for E-RGCH reception) which is hardly used, at a level similar to that of a high-capability mobile terminal A.

As previously mentioned, the E-HICH is a channel via which an ACK/NACK signal for notifying success or failure of E-DCH reception in each of the serving base station 11 and the non-serving base stations 12-1 and 12-2 is transmitted. Therefore, E-HICH data transmitted from the serving base station 11 and the non-serving base stations 12-1 and 12-2 differ for each base station.
Thus, because the description of E-HICH data differs for each base station, soft-combining cannot be carried out and therefore a number of RAKE combining units 206 and so on corresponding to the number of E-HICHs are needed.

The E-HICH via which each of the serving base station 11 and the non-serving base stations 12-1 and 12-2 transmits E-HICH data differs from the DCH via which data, such as sound data, are handled in that the timing at which E-HICH data reach the mobile terminal 1 is not adjusted among the serving base station 11 and the non-serving base stations 12-1 and 12-2 which are E-DCH active set base stations.
Therefore, there can be a case in which E-HICH data transmitted from the plurality of base stations reach the mobile terminal simultaneously.
Because the mobile terminal 1 cannot control the timing at which E-HICH data transmitted from each of the serving base station 11 and the non-serving base stations 12-1 and 12-2 reach the mobile terminal, it is difficult for even the decoding unit 207 to carry out time division processing.

Therefore, in accordance with this Embodiment 1, in order to prevent the hardware size of a low-capability mobile terminal B from becoming large even if the number of base stations in the E-DCH active set increases, a plurality of possible values for the maximum number of non-serving base stations (the maximum number of base stations in the E-DCH active set) which can be selected by the base station control apparatus 3 are made available. More specifically, a plurality of possible values for the maximum number of base stations which can become a non-serving base station among base stations in the DCH active set are made available, and the maximum number of base stations in the E-DCH active set is set up as a characteristic value according to the capability of the mobile terminal 1 for each mobile terminal 1 which provides the mobile communication system.
More specifically, to a high-capability mobile terminal A, a larger value is set, as the maximum number of non-serving base stations, whereas to a low-capability mobile terminal B a smaller value is set, as the maximum number of non-serving base stations.

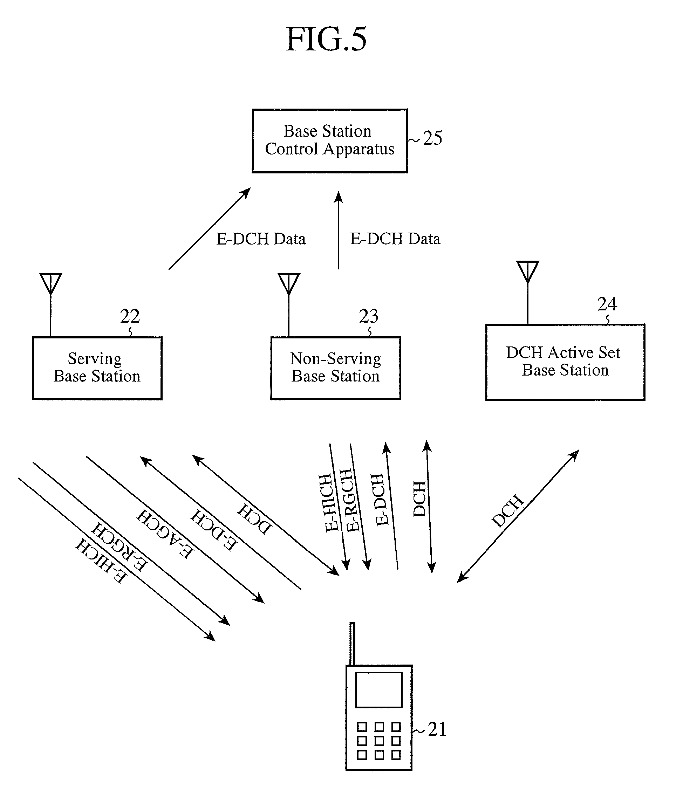

Fig. 5 is a block diagram showing a mobile communication system in accordance with Embodiment 1 of the present invention.
In the figure, a mobile terminal 21 has the maximum number of base stations in the E-DCH active set (the maximum number of base stations which can become a non-serving base station for the mobile terminal) which is beforehand set thereto according to the capability thereof, and is the one, such as a mobile phone or a mobile PC, equipped with a function of explicitly or implicitly notifying the maximum number of base stations in the E-DCH active set to a base station control apparatus 25.
The maximum number of base stations in the E-DCH active set for the mobile terminal 21 is a value specific to the mobile terminal 21, and is set up separately and independently from the maximum number of non-serving base stations for any other mobile terminal 21 not shown in the figure.

The serving base station 22 takes charge of a scheduling process for the mobile terminal 21, and controls the transmission rate, the transmission power, and so on in the mobile terminal 21 so as to prevent the power simultaneously transmitted from a plurality of mobile terminals 21 from exceeding a threshold, like the serving base station 11 shown in Fig. 2.
In this case, the control of the transmission power denotes controlling the permissible transmission power of the mobile terminal 21 by providing the mobile terminal 21 with a specification of the maximum transmission rate, but does not denote any power control in a high-speed closed loop.
Although the non-serving base station 23 does not take charge of any scheduling process, like the non-serving base stations 12-1 and 12-2 of Fig. 2, the non-serving base station has a function of controlling the power of transmission of data in the mobile terminal 21 by transmitting the Down command for making a request to lower the transmission rate to the mobile terminal 21.

The DCH active set base station 24 carries out transmission and reception of DCH data to and from the mobile terminal 21 to perform macro diversity reception of data transmitted from the mobile terminal 21 in cooperation with the serving base station 22 and the non-serving base station 23, like the DCH active set base stations 2a and 2b as shown in Fig. 1, but does not carry out any reception of E-DCH data. Therefore, E-DCH data causes interference in the DCH active set base station 24.

The DCH active set base station 24 can become a non-serving base station under the conditions that the number of base stations in the E-DCH active set for the mobile terminal 21 does not exceed its maximum number, and there can be a case in which the DCH active set base station is changed to a non-serving base station according to an instruction from the base station control apparatus 25.
Thus, a base station included in the E-DCH active set can be selected from the base stations included in the DCH active set (in this case, the DCH active set base station 24), and the reason is as follows.
The reason is that in the case of uplink channels, because the synchronization is achieved by using a pilot included in the DPCCH (Dedicated Physical Control Channel), and the phase reference of a signal is determined using the pilot, any base station other than base stations included in the DCH active set cannot receive E-DCH data.

The base station control apparatus 25 carries out a process of classifying each of the base stations 22, 23, and 24 into a serving base station, a non-serving base station, or a DCH active set base station (a base station for DCH soft handover) according to the receiving condition of data in each of the base stations 22, 23, and 24.
More specifically, the base station control apparatus 25 has a function of selecting a base station which becomes a non-serving base station under the conditions that the number of non-serving base stations for the mobile terminal 21 does not exceed its maximum number.
In the example of Fig. 5, the base station 23 is selected as a non-serving base station, whereas the base station 24 is not selected as a non-serving base station.
In this case, the combination of the serving base station 22 and the non-serving base station 23 becomes the E-DCH active set.

Fig. 6 is a block diagram showing a mobile terminal 21 in accordance with Embodiment 1 of the present invention, and, in the figure, a control unit 101 carries out delivery of data and parameters while controlling each processing unit in the mobile terminal 21.
When receiving data input by a user from the control unit 101, a transmission buffer 102 carries out a process of holding the data temporarily.

A DPCH transmitting unit 103 carries out a process of carrying the data currently held in the transmission buffer 102 and an event output from a protocol processing unit 130 (e.g., the maximum number of base stations in the E-DCH active set or Capabilities information showing the capability of the mobile terminal 21, and so on) onto the DCH, and transmitting the DCH data. DPCH (Dedicated Physical CHannel) is the name of a physical layer which is used to carry DCH data, and means a channel including all things to be actually transmitted containing a pilot signal, a power control command, and so on in addition to the DCH data.

A power control unit 104 carries out a process of calculating the power which can be used for the E-DCH from the power of the DCH data output from the DPCH transmitting unit 103, an AG (Absolute Grant) received by an E-AGCH receiving unit 118, and an RG (Relative Grant) received by an E-RGCH receiving unit 119.
The AG directly indicates, as an absolute value, permissible transmission power transmitted from the serving base station 22 to the mobile terminal 21 on the basis of the results of the scheduler.
The RG relatively indicates increase or decrease in the permissible transmission power for the mobile terminal 21.
The serving base station 21 can issue one of three types of instructions: an instruction to increase the permissible transmission power, an instruction to keep the current permissible transmission power (DTX), and an instruction to decrease the permissible transmission power.
The non-serving base station 22 can issue one of two types of instructions: an instruction to keep the current permissible transmission power (DTX), and an instruction to decrease the permissible transmission power. This instruction to decrease the permissible transmission power is the Down command.

A transmission rate control unit 105 carries out a process of controlling the output of the data currently held by the transmission buffer 102 according to an instruction from the scheduler in the serving base station 21.
In addition, the transmission rate control unit 105 carries out a process of calculating an E-TFCI (an E-DCH Transport Format Combination Indicator) from the remaining power of the mobile terminal 21 which is calculated by the power control unit 104 and an SG output from an SG management unit 128 (Serving Grant: a value used for controlling the permissible power of the E-DCH which is given by the scheduler), coding the transport block size of the E-DCH of the transmit side and information about the modulation method, and carrying them on the E-TFCI (a control bit). A receive side acquires the transport block size and the modulation method on the basis of the E-TFCI (a control bit), and carries out demodulation and decoding processing.

An HARQ processing unit 106 carries out a process of determining the ratio between systematic bits which are transmission data information and parity bits which are redundant bits.
A scheduling request information generating unit 107 carries out a process of generating scheduling request information from the data output from the transmission buffer 102 and the power which can be used for E-DCH and which is calculated by the power control unit 104.

An encoder unit 108 carries out a process of mixing the systematic bits (information bits) and the parity bits (bits for error correction) on the basis of information on RV (Redundancy Version) output from a retransmission control unit 110, and coding the mixed result. The RV is information indicating the combination of the systematic bits and the parity bits.
An E-DCH transmitting unit 109 carries out a process of carrying the E-DCH data onto a physical channel in such a manner that the E-DCH enters a state in which the data can be transmitted in consideration of the information on the RV output from the retransmission control unit 110.

The retransmission control unit 110 carries out a process of calculating the RV and an RSN (Retransmission Sequence Number) from information on ACK/NACK received by an E-HICH receiving unit 127. The RSN is information indicating the number of times that retransmission is performed.
An E-DPCCH transmitting unit 111 carries out a process of coding the E-TFCI (the control bit) calculated by the transmission rate control unit 105, the scheduling request information generated by the scheduling request information generating unit 107, and the RSN output from the retransmission control unit 110 in a form in which they can be transmitted.

A modulating unit 112 carries out a process of modulating a carrier with signals associated with channels to generate a desired carrier wave by spreading the signals after multiplexing them.
A power amplifying unit 113 carries out a process of amplifying the carrier wave output from the modulating unit 112 so that it has desired power.
While the antenna 114 transmits the modulated signal which is the carrier wave amplified by the power amplifying unit 113 to the serving base station 22, the non-serving base station 23, and the DCH active set base station 24, the antenna 114 receives a modulated signal which is a carrier wave transmitted from each of the serving base station 22, the non-serving base station 23, and the DCH active set base station 24.
Maximum number notifying means or a capability notifying means comprise the DPCH transmitting unit 103, the modulating unit 112, the power amplifying unit 113, the antenna 114, and the protocol processing unit 130.

A low noise amplifying unit 115 carries out a process of amplifying the weak modulated signal received by the antenna 114 to a level required for demodulation.
A demodulating unit 116 carries out a process of despreading the modulated signal amplified by the low noise amplifying unit 115 (i.e., despreading the modulated signal with the same code as that used when spread by the transmission source), and then demultiplexing the despread modulated signal into signals associated with the original channels.

A CPICH receiving unit 117 carries out a receiving process of receiving data via a common pilot channel, and outputs the receive level of the common pilot channel to the protocol processing unit 130.
An E-AGCH receiving unit 118 carries out a process of receiving the AG from the serving base station 22.
An E-RGCH receiving unit 119 carries out a process of receiving the RG from the serving base station 22 or the non-serving base station 23.
A number of E-RGCH receiving units 119 corresponding to the maximum number of base stations in the E-DCH active set are made available.
Power adjusting means comprise the E-AGCH receiving unit 118, the E-RGCH receiving unit 119, the power control unit 104, and the transmission rate control unit 105.

A DPCH receiving unit 120 carries out a process of receiving DCH data.
A P-CCPCH receiving unit 121 carries out a process of receiving report information.
A P-CCPCH stands for "Primary Common Control Physical Channel."

A DCH active set management unit 122 carries out a process of checking the state of the current active set (the DCH active set different from the E-DCH active set) from the report information received by the P-CCPCH receiving unit 121.
A DCH active set control unit 123 carries out a process of acquiring the amount of interference of each base station from the P-CCPCH receiving unit 121, the E-AGCH receiving unit 118, and so on, determining the description of the control of the DCH active set from the amount of interference of each base station and the state of the current active set checked by the DCH active set management unit 122, and outputting the description of the control to the protocol processing unit 130.

An E-DCH active set management unit 124 acquires the state of the current E-DCH active set from the P-CCPCH receiving unit 121 or an E-DCH active set control unit 126, and updates the current active set according to an instruction from the E-DCH active set control unit 126.
A correlation calculation unit 125 calculates a correlation of the power of the CPICH which is a common pilot channel and which is received by the CPICH receiving unit 117, and outputs the correlation of the power of the CPICH to the E-DCH active set control unit 126.

The E-DCH active set control unit 126 carries out a process of acquiring either the maximum number of base stations in the E-DCH active set or the Capabilities information indicating the capability of the mobile terminal 21 from the protocol processing unit 130, acquiring the amount of interference of each base station from the P-CCPCH receiving unit 121, the E-AGCH receiving unit 118, and so on, acquiring the state of the current E-DCH active set from the E-DCH active set management unit 124, acquiring the SG from the SG management unit 128 so as to determine the description of the control of the E-DCH active set, and outputting the description of the control to the protocol processing unit 130.

The E-HICH receiving unit 127 carries out a process of receiving an ACK/NACK signal showing whether each of the serving base station 22 and the non-serving base station 23 has received the E-DCH data. Actually, a number of E-HICH receiving units 127 corresponding to the maximum number of base stations in the E-DCH active set are made available.
The SG management unit 128 carries out a process of updating the SG on the basis of the AG received by the E-AGCH receiving unit 118, the RG received by the E-RGCH receiving unit 119, and so on.

The storage unit 129 is a memory or the like for storing the maximum number of base stations in the E-DCH active set, the Capabilities information showing the capability of the mobile terminal 21 which is used in order for the base station control apparatus 25 to set up the maximum number of base stations in the E-DCH active set, or the like, and the storage unit 129 provides a maximum number storage means.
The storage unit 129 can be an internal memory, such as a ROM (Read Only Memory) or a RAM (Random Access Memory) in the mobile terminal 21, or can be an external memory, such as an SIM card (Subscriber Identity Module) inserted into the mobile terminal 21 from outside the mobile terminal.
As an alternative, the mobile terminal 21 can read the maximum number of base stations in the E-DCH active set or the Capabilities information showing the capability of the mobile terminal 21 which is recorded in an SIM card, and write the description of the information read thereby in an internal RAM thereof.

The maximum number of base stations in the E-DCH active set or the Capabilities information showing the capability of the mobile terminal 21 is a characteristic value of the mobile terminal 21, and can be one value or a plurality of values.
Furthermore, the maximum number of base stations in the E-DCH active set or the Capabilities information showing the capability of the mobile terminal 21 is stored in the storage unit 129 in one of modes as will be shown below.

In a first mode, the maximum number of base stations in the E-DCH active set or the Capabilities information showing the capability of the mobile terminal 21 is stored, as an initial value, in the storage unit 129 of mobile terminal 21.
In a second mode, the maximum number of base stations in the E-DCH active set or the Capabilities information showing the capability of the mobile terminal 21 is stored in the storage unit 129 of the mobile terminal 21 after it has been acquired from the base station control apparatus 25, the base station 22, 23, or 24, or other equipment in the mobile communication system via communication.

In a third mode, an initial value stored in the storage unit 129 of the mobile terminal 21 is processed by, for example, the protocol processing unit 130 of the mobile terminal 21, and the processed result is stored in the storage unit 129 of the mobile terminal 21 as the maximum number of base stations in the E-DCH active set or the Capabilities information showing the capability of the mobile terminal 21.
In this mode, the mobile terminal 21 can alternatively transmit the initial value stored in the storage unit 129 thereof to the base station 22, 23, or 24, the base station control apparatus 25, or other equipment to enable the base station 22, 23, or 24, the base station control apparatus 25, or the other equipment to process the initial value, and store the processed result in the storage unit 129 thereof as the maximum number of base stations in the E-DCH active set or the Capabilities information showing the capability of the mobile terminal 21.

The protocol processing unit 130 refers to the maximum number of base stations in the E-DCH active set or the Capabilities information showing the capability of the mobile terminal 21 stored in the storage unit 129 as needed.
The protocol processing unit 130 carries out a generation process of generating a request for addition of a non-serving base station when the current number of base stations in the E-DCH active set is less than the maximum number of base stations in the E-DCH active set stored in the storage unit 129 or when the current number of base stations in the E-DCH active set is less than the maximum number of base stations in the E-DCH active set which is uniquely set up from the Capabilities information showing the capability of the mobile terminal 21.
In contrast, when the current number of base stations in the E-DCH active set is equal to or greater than the maximum number of base stations in the E-DCH active set stored in the storage unit 129, or when the current number of base stations in the E-DCH active set is less than the maximum number of base stations in the E-DCH active set which is uniquely set up from the Capabilities information showing the capability of the mobile terminal 21, the protocol processing unit carries out a generation process of generating a request for update of the non-serving base stations.
The protocol processing unit 130 also carries out communication protocol processing.
Addition/update request means comprise the DPCH transmitting unit 103, the modulating unit 112, the power amplifying unit 113, the antenna 114, and the protocol processing unit 130.

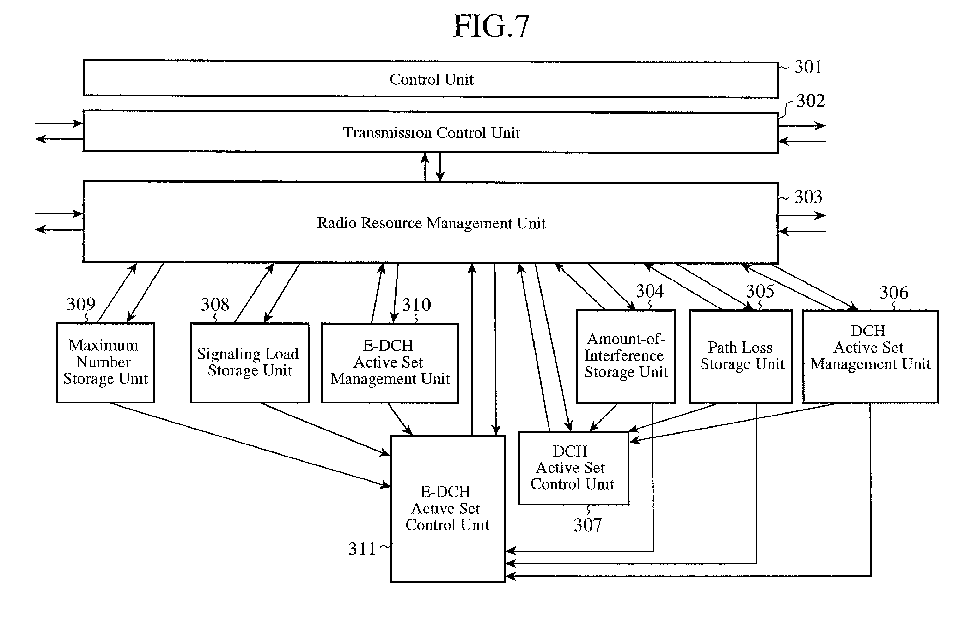

Fig. 7 is a block diagram showing the base station control apparatus 25 in accordance with Embodiment 1 of the present invention, and, in the figure, a control unit 301 carries out a process of controlling each processing unit of the base station control apparatus 25.
A transmission control unit 302 carries out a transmission control process of performing data link without any error.
A radio resource management unit 303 manages the amount of interference, the load, and so on while managing the radio resources, such as frequencies and codes.

An amount-of-interference storage unit 304 carries out a process of storing the amount of interference of each of base stations 22, 23, and 24 under the control of the base station control apparatus.
A path loss storage unit 305 carries out a process of storing a path loss between each mobile terminal 21 which the base stations 22, 23, and 24 under the control of the base station control apparatus grasp and each of the base stations 22 and 23, and 24.
A DCH active set management unit 306 carries out a process of managing which one of the base stations 22, 23, and 24 under the control of the base station control apparatus is a base station in the DCH active set.
A DCH active set control unit 307 carries out a control process of judging which base station is to be included in the DCH active set, and including one of the base stations in the DCH active set.

A signaling load storage unit 308 carries out a process of storing the number of signalings measured by each of the bases 22, 23, and 24.
A maximum number storage unit 309 carries out a process of storing the maximum number of base stations in the E-DCH active set which is associated with each mobile terminal 21 for which the base station control apparatus 25 serves as a serving RNC (a serving RNC is a base station control apparatus which takes charge of management of a specific mobile terminal).
The maximum number of base stations in the E-DCH active set is stored in the maximum number storage unit 309 in either one of modes as will be shown below.

In a first mode, the maximum number of base stations in the E-DCH active set to be stored in the mobile terminal 21 is stored after transmitted from the mobile terminal 21 via the bases 22, 23, and 24. In this case, the maximum number storage unit 309 provides a maximum number acquiring means.
In a second mode, the Capabilities information stored in the mobile terminal 21 is transmitted from the mobile terminal 21 via the bases 22, 23, and 24, and the radio resource management unit 303 or another processing unit of the base station control apparatus 25 sets up the maximum number of base stations in the E-DCH active set uniquely from the Capabilities information and then stores the maximum number in the maximum number storage unit. In this case, the radio resource management unit 303 provides a maximum number setting means.

An E-DCH active set management unit 310 carries out a process of managing which one of the base stations 22, 23, and 24 under the control of the base station control apparatus is a base station in the E-DCH active set.
An E-DCH active set control unit 311 carries out a control process of including a base station indicated by base-station-to-be-added specification information included in an addition event or an update event transmitted from the mobile terminal 21 in the E-DCH active set while using, as an upper limit, the maximum number of base stations in the E-DCH active set stored in the maximum number storage unit 309.
The E-DCH active set control unit 311 provides a non-serving base station selecting means.

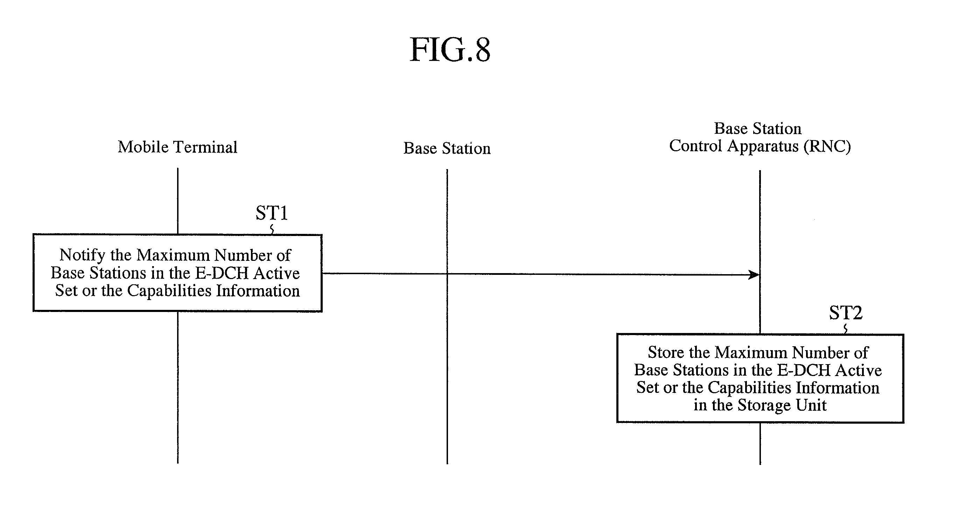

Fig. 8 is a sequence diagram showing a procedure of the mobile terminal 21 notifying the maximum number of base stations in the E-DCH active set or the Capabilities information to the base station control apparatus 25.

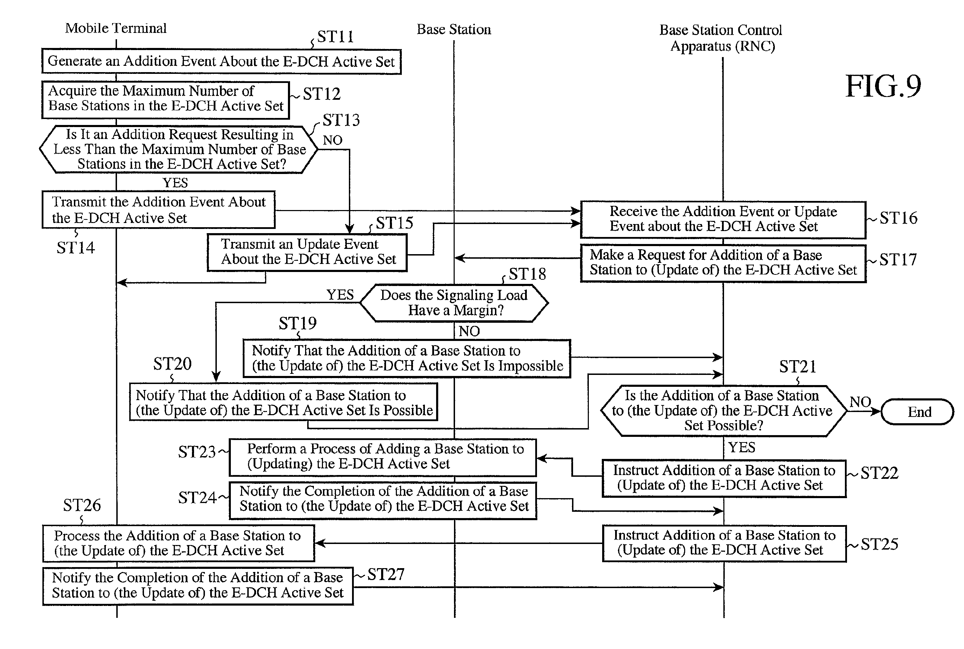

Fig. 9 is a sequence diagram in a case in which the mobile terminal 21 performs a process of adding a base station to (or updating) the E-DCH active set.

Next, the operation of the mobile communication system will be explained.
The maximum number of base stations in the E-DCH active set which is set up according to the capability of the mobile terminal 21 is stored in the storage unit 129 of the mobile terminal 21.
The maximum number of base stations in the E-DCH active set stored in the storage unit 129 of the mobile terminal 21 is specific to the mobile terminal, and, in case that the mobile terminal 21 is, for example, a high-capability mobile terminal A which supports a high-speed rate, the maximum number of base stations in the E-DCH active set is set to "5", whereas in case that the mobile terminal 21 is a low-capability mobile terminal B which always transmits data only at a low-speed rate, the maximum number of base stations in the E-DCH active set is set to "3."
In this case, the maximum number of base stations in the E-DCH active set is stored in the storage unit 129 of the mobile terminal 21. Instead of the maximum number of base stations in the E-DCH active set, the Capabilities information showing the capability of the mobile terminal 21 can be stored in the storage unit.

The protocol processing unit 130 of the mobile terminal 21 acquires the maximum number of base stations in the E-DCH active set or the Capabilities information from the storage unit 129, and stores temporarily the maximum number of base stations in the E-DCH active set or the Capabilities information in the transmission buffer 102.
When the protocol processing unit 130 stores the maximum number of base stations in the E-DCH active set or the Capabilities information in the transmission buffer 102, the DPCH transmitting unit 103 of the mobile terminal 21 carries out a process of carrying the maximum number of base stations in the E-DCH active set or the Capabilities information stored in the transmission buffer 102 onto the DCH and transmitting the DCH data (step ST1).
However, the channel used for the transmission of the maximum number of base stations in the E-DCH active set or the Capabilities information can be an uplink channel other than the DCH.

After the DPCH transmitting unit 103 carries out the process of transmitting the DCH data(a signal onto which the maximum number of base stations in the E-DCH active set or the Capabilities information is carried), the modulating unit 112 of the mobile terminal 21 spreads a channel signal on which the transmission process has been performed after multiplexing it with, for example, another channel signal output from the E-DCH transmitting unit 109, and modulates a carrier with the channel signal to generate a desired carrier wave.
When receiving the carrier wave from the modulating unit 112, the power amplifying unit 113 of the mobile terminal 21 carries out a process of amplifying the carrier wave so that it has desired power.
The antenna 114 transmits the modulated signal to the base station control apparatus 25 by transmitting the modulated signal which is the carrier wave amplified by the power amplifying unit 113 to the serving base station 22, the non-serving base station 23, and the DCH active set base station 24.

When receiving the modulated signal transmitted from the mobile terminal 21 via the base stations, the transmission control unit 302 of the base station control apparatus 25 demodulates the modulated signal and outputs the channel signal onto which the maximum number of base stations in the E-DCH active set or the Capabilities information is carried to the radio resource management unit 303.
When the channel signal output from the transmission control unit 302 is the one onto which the maximum number of base stations in the E-DCH active set is carried, the radio resource management unit 303 of the base station control apparatus 25 stores the maximum number of base stations in the E-DCH active set in the maximum number storage unit 309 just as it is.

In contrast, when the channel signal output from transmission control unit 302 is the one onto which the Capabilities information is carried, the radio resource management unit sets up the maximum number of base stations in the E-DCH active set uniquely from the Capabilities information and then stores the maximum number in the maximum number storage unit 309 (step ST2).
For example, when the Capabilities information shows that the capability of the mobile terminal 21 is high and supports a high-speed rate, the radio resource management unit sets the maximum number of base stations in the E-DCH active set to "5", whereas when the Capabilities information shows that the capability of the mobile terminal 21 is low and does not support any high-speed rate, the radio resource management unit sets the maximum number of base stations in the E-DCH active set to "3."

As an alternative, even if the channel signal output from the transmission control unit 302 is the one onto which the Capabilities information is carried, the radio resource management unit 303 can store the Capabilities information in the maximum number storage unit 309 just as it is, and, when the E-DCH active set control unit 311 which will be mentioned later checks the maximum number of base stations in the E-DCH active set, can set up the maximum number of base stations in the E-DCH active set from the Capabilities information stored in the maximum number storage unit 309.

In the example of Fig. 8, although the mobile terminal 21 notifies the maximum number of base stations in the E-DCH active set or the Capabilities information to the base station control apparatus 25, when, for example, the base station control apparatus 25 holds information with which it can grasp the capability of the mobile terminal 21 (e.g., maximum available transmission power), the mobile terminal 21 needs to notify neither the maximum number of base stations in the E-DCH active set nor the Capabilities information to the base station control apparatus 25.

When notifying neither the maximum number of base stations in the E-DCH active set nor the Capabilities information to the base station control apparatus, there are merits as follows:
(1) There is no signaling to be added newly.
(2) The maximum number storage unit 309 of the base station control apparatus 25 becomes unnecessary.
(3) As compared with the case in which the maximum number of base stations in the E-DCH active set or the Capabilities information is notified to the base station control apparatus, the compatibility with the conventional technology (R'99) in the base station control apparatus 25 is improved.

Hereafter, the process of adding a base station to (updating) the E-DCH active set will be explained in full detail.
The protocol processing unit 130 of the mobile terminal 21 monitors the receive level of each of a plurality of neighboring base stations by, for example, measuring the receive level of data, via a common pilot channel, received by the CPICH receiving unit 117, and, when a base station which provides a receive level equal to or higher than a predetermined threshold appears, generates an addition event about addition of the base station to the E-DCH active set (step ST11).
The protocol processing unit 130 also acquires the maximum number of base stations in the E-DCH active set stored in the storage unit 129, and outputs it to the E-DCH active set control unit 126 (step ST12).
At this time, when the Capabilities information is stored in the storage unit 129, the protocol processing unit sets up the maximum number of base stations in the E-DCH active set from the Capabilities information, and outputs the maximum number to the E-DCH active set control unit 126.

In the receive side an addition event for adding a base station to the E-DCH active set needs to be distinguished from an addition event for adding a base station to the DCH active set. Therefore, it is necessary to newly define an event as an addition event for adding of a base station to the E-DCH active set.
As an alternative, the information element which makes the receive side recognize that an addition event for adding a base station to the E-DCH active set has occurred can be added to an addition event for adding of a base station to the DCH active set, and the addition event for adding a base station to the DCH active set to which the information element is added can be transmitted to the receive side.
Same as in the case of an addition event for adding a base station to the E-DCH active set, it is also necessary to distinguish an update event for updating of the E-DCH active set from an update event for updating of the DCH active set.

When the protocol processing unit 130 generates an addition event about addition of a base station to the E-DCH active set and the E-DCH active set control unit 126 of the mobile terminal 21 receives the maximum number of base stations in the E-DCH active set from the protocol processing unit 130, the E-DCH active set control unit compares the maximum number of base stations in the E-DCH active set with the current number of base stations in the E-DCH active set which is managed by the E-DCH active set management unit 124 (step ST13).
When the current number of base stations in the E-DCH active set is smaller than the maximum number of base stations in the E-DCH active set, the E-DCH active set control unit 126 grants the addition event about addition of the base station to the E-DCH active set.
In contrast, when the current number of base stations in the E-DCH active set has reached the maximum number of base stations in the E-DCH active set or when the number of base stations in the E-DCH active set exceeds the maximum number of base stations in the E-DCH active set if the E-DCH active set control unit grants the addition event about addition of the base station to the E-DCH active set, the E-DCH active set control unit refuses the addition event about addition of the base station to the E-DCH active set and then generates an update event of update of the E-DCH active set.

The case in which when the current number of base stations in the E-DCH active set has reached the maximum number of base stations in the E-DCH active set or when the number of base stations in the E-DCH active set exceeds the maximum number of base stations in the E-DCH active set if the E-DCH active set control unit grants the addition event about addition of the base station to the E-DCH active set, the E-DCH active set control unit refuses the addition event about addition of the base station to the E-DCH active set and then generates an update event of update of the E-DCH active set is shown above, though an update event about update of the E-DCH active set can be alternatively generated as follows.

That is, the protocol processing unit 130 of the mobile terminal 21 measures the receive level of data received, via the common pilot channel, by the CPICH receiving unit 117, and, when comparing the receive level with the predetermined threshold, makes available a threshold for generation of an update event together with the threshold for generation of an addition event and not only compares the receive level of the common pilot channel not only with the threshold for generation of an addition event, but also compares with the threshold for generation of an update event.
The protocol processing unit then generates an addition event about addition of a base station to the E-DCH active set or an update event about update of the E-DCH active set on the basis of the results of comparison with the two thresholds.
When generating an addition event about addition of a base station to the E-DCH active set or an update event about update of the E-DCH active set, the protocol processing unit can alternatively carry out the generation on the basis of other conditions different from the thresholds for the receive level.

When the E-DCH active set control unit 126 grants the addition event about addition of the base station to the E-DCH active set, the protocol processing unit 130 of the mobile terminal 21 outputs the addition event to the DPCH transmitting unit 103 (step ST14), whereas when the E-DCH active set control unit 126 generates an update event about update of the E-DCH active set, the protocol processing unit outputs the update event to the DPCH transmitting unit 103 (step ST15).
Thereby, the mobile terminal 21 transmits the addition event about addition of the base station to the E-DCH active set or the update event about update of the E-DCH active set to the base station control apparatus 25 via the base stations, as in the case of transmitting the maximum number of base stations in the E-DCH active set or the like to the base station control apparatus 25.
Currently, the mobile station carries out E-DCH signaling data using the DPCH, though it can be considered that the mobile station carries out E-DCH signaling data using the E-DCH without using the DPCH in the future.
In this case, it can also be considered that the addition event, the update event, and so on are transmitted by using the E-DCH or another channel, instead of the DPCH.

When receiving the addition event about addition of the base station to the E-DCH active set or the update event about update of the E-DCH active set transmitted from the mobile terminal 21 (step ST16), the radio resource management unit 303 of the base station control apparatus 25 outputs the addition event or the update event to the E-DCH active set control unit 311.
When receiving the addition event about addition of the base station to the E-DCH active set or the update event about update of the E-DCH active set from the radio resource management unit 303, the E-DCH active set control unit 311 of the base station control apparatus 25 acquires information about specification of the base station to be added included in the addition event or the update event.
When acquiring the specification information about specification of the base station to be added, the E-DCH active set control unit 311 carries out a control process of including the base station specified by the specification information in the E-DCH active set while using, as an upper limit, the maximum number of base stations in the E-DCH active set stored in the maximum number storage unit 309.

In the case in which the mobile communication system has the structure as shown in Fig. 5, if the maximum number of base stations in the E-DCH active set is to, for example, "3" when an addition event about addition of a base station to the E-DCH active set is received, it is possible to include one base station in the E-DCH active set because the current number of base stations in the E-DCH active set is "2" (the serving base station 22 and the non-serving base station 23 are base stations in the E-DCH active set). If the DCH active set base station 24 is specified as a base station to be added, the base station control apparatus carries out a control process of including the DCH active set base station 24 in the E-DCH active set.

In contrast, if the maximum number of base stations in the E-DCH active set is to, for example, "2" when an update event about update of the E-DCH active set is received, it is already difficult to include any new base station in the E-DCH active set. If the DCH active set base station 24 is specified as a base station to be added, the base station control apparatus carries out a control process of including the DCH active set base station 24 in the E-DCH active set, and simultaneously deleting the non-serving base station 23 from the base stations in the E-DCH active set.

When receiving a request to add the DCH active set base station 24 to the E-DCH active set from the E-DCH active set control unit 311, the radio resource management unit 303 of the base station control apparatus 25 transmits the request to add the DCH active set base station to the E-DCH active set to the DCH active set base station 24 (step ST17).
In contrast, when receiving a request to add the DCH active set base station 24 to the E-DCH active set and simultaneously delete the non-serving base station 23 from the base stations in the E-DCH active set from the E-DCH active set control unit 311, the radio resource management unit transmits a request to update the E-DCH active set to the DCH active set base station 24 (step ST17).

When receiving the addition request about addition of the base station to the E-DCH active set or the update request about update of the E-DCH active set from the base station control apparatus 25, the DCH active set base station 24 measures a signaling load (the number of signalings used for E-AGCH transmission, E-RGCH transmission, E-HICH transmission, and so on, the number of codes, the transmission power, or the like).
After measuring the signaling load, the DCH active set base station 24 judges whether or not there is a margin in the signaling load (step ST18).
For example, the DCH active set base station judges whether there is a margin in the signaling load by judging whether the number of signalings currently being used reaches a predetermined number.
The DCH active set base station 24 can judge the margin in the hardware processing capability of the DCH active set base station 24 instead of the number of signalings currently being used.

Because the signaling is insufficient currently when there is no margin in the signaling load, the DCH active set base station 24 notifies the base station control apparatus 25 that any addition of a base station to the E-DCH active set cannot be carried out (step ST19), and ends the processing.
In contrast, when the signaling load has a margin, the DCH active set base station notifies the base station control apparatus 25 that addition of the base station in the E-DCH active set can be carried out (step ST20).

When receiving the notification from the DCH active set base station 24, the E-DCH active set control unit 311 of the base station control apparatus 25 judge whether it can carry out the addition of the base station to the E-DCH active set or the update of the E-DCH active set on the basis of the notification (step ST21).
When the E-DCH active set control unit 311 judges that it can add the base station to the E-DCH active set, the transmission control unit 302 of the base station control apparatus 25 transmits an instruction to add the base station to the E-DCH active set to the DCH active set base station 24 (step ST22).
When the E-DCH active set control unit 311 judges that it can update the E-DCH active set, the transmission control unit transmits an instruction to update the E-DCH active set (an update instruction for a deletion instruction) to the non-serving base station 23 at the same time when transmits an instruction to update the E-DCH active set (an update indication for an addition instruction) to the DCH active set base station 24 (step ST22).
In Fig. 9, the non-serving base station 23 which is to be deleted from the E-DCH active set is not illustrated for the sake of simplicity of the drawing.

When receiving the addition instruction to add the base station to the E-DCH active set or the update instruction to update the E-DCH active set from the base station control apparatus 25, the DCH active set base station 24 carries out an adding process of adding itself to the E-DCH active set (step ST23).
After carrying out the adding process of adding itself to the E-DCH active set, the DCH active set base station 24 notifies the completion of the adding processing to the base station control apparatus 25 (step ST24).
When receiving the update instruction to update the E-DCH active set from the base station control apparatus 25, the non-serving base station 23 carries out a deleting process of deleting itself from the E-DCH active set.
After carrying out the deleting process of deleting itself from the E-DCH active set, the non-serving base station 23 notifies the completion of the deleting process to the base station control apparatus 25.

When receiving the notification of the completion of the adding processing from the DCH active set base station 24 which has been added to the E-DCH active set, the transmission control unit 302 of the base station control apparatus 25 transmits an addition instruction to add the base station to the E-DCH active set or an update instruction to update the E-DCH active set to the mobile terminal 21 via the base stations (step ST25).

When the P-CCPCH receiving unit 121 receives the addition instruction to add the base station to the E-DCH active set or the update instruction to update the E-DCH active set from the base station control apparatus 25, the E-DCH active set management unit 124 of the mobile terminal 21 updates the current active set according to an instruction from the E-DCH active set control unit 126 (step ST26).
After the E-DCH active set management unit 124 carries out the adding process of adding the base station to the E-DCH active set or the update process of updating the E-DCH active set, the protocol processing unit 130 of the mobile terminal 21 notifies the completion of the adding processing or the update process to the base station control apparatus 25 (step ST27).

While Fig. 9 shows the sequence in the case in which the above-mentioned mobile terminal 21 performs the addition (or update) process of adding a base station to the E-DCH active set actively, Fig. 10 shows a sequence in a case in which the base station control apparatus 25 performs the addition (or update) process of adding a base station to the E-DCH active set actively.
Hereafter, a process of adding a base station to (or updating) the E-DCH active set which the base station control apparatus 25 carries out actively will be explained.

The protocol processing unit 130 of the mobile terminal 21 notifies the receive level or the path loss information of the CPICH receiving unit 117 to the base station control apparatus 25 (step ST31).
When receiving the receive level or the path loss information of the CPICH receiving unit 117 transmitted from the mobile terminal 21, the radio resource management unit 303 of the base station control apparatus 25 stores the receive level or the path loss information in the path loss storage unit 305 (step ST32).

Each of the base stations 22, 23, and 24 under the control of the base station control apparatus 25 measures the amount of interference and the signaling load, and notifies the amount of interference and the signaling load to the base station control apparatus 25 (steps ST33 and ST35).
When receiving the amount of interference and the signaling load which are transmitted from the mobile terminal 21 (steps ST34 and ST36), the radio resource management unit 303 of the base station control apparatus 25 stores the amount of interference in the amount-of-interference storage unit 304, and stores the signaling load in the signaling load storage unit 308.

The radio resource management unit 303 of the base station control apparatus 25 refers to the path loss information stored in the path loss storage unit 305, the amount of interference stored in the amount-of-interference storage unit 304, and the signaling load stored in the signaling load storage unit 308 so as to judge whether to add a base station to be included in the E-DCH active set (step ST37).
When judging that it is necessary to add a base station to be included in the E-DCH active set, the radio resource management unit 303 generates an addition event about addition of the base station to the E-DCH active set (step ST38).

When receiving the addition event about addition of the base station to the E-DCH active set from the radio resource management unit 303, the E-DCH active set control unit 311 of the base station control apparatus 25 checks the maximum number of base stations in the E-DCH active set stored in the maximum number storage unit 309 (step ST39).
In a case in which the Capabilities information, instead of the maximum number of base stations in the E-DCH active set, is stored in the maximum number storage unit 309, the base station control apparatus sets up the maximum number of base stations in the E-DCH active set from the Capabilities information.

After checking the maximum number of base stations in the E-DCH active set of the mobile terminal 21, the E-DCH active set control unit 311 compares the maximum number of base stations in the E-DCH active set with the current number of base stations in the E-DCH active set which is managed by the E-DCH active set management unit 310 (step ST40).
When the current number of base stations in the E-DCH active set is smaller than the maximum number of base stations in the E-DCH active set, the E-DCH active set control unit 311 grants the addition event about addition of the base station to the E-DCH active set.
In contrast, when the current number of base stations in the E-DCH active set has reached the maximum number of base stations in the E-DCH active set or when the number of base stations in the E-DCH active set exceeds the maximum number of base stations in the E-DCH active set if the E-DCH active set control unit grants the addition event about addition of the base station to the E-DCH active set, the E-DCH active set control unit refuses the addition event about addition of the base station to the E-DCH active set and then generates an update event of update of the E-DCH active set.

When the E-DCH active set control unit 311 grants the addition event about addition of the base station to the E-DCH active set, the transmission control unit 302 of the base station control apparatus 25 transmits an addition instruction to add the base station to the E-DCH active set to the DCH active set base station 24 (step ST41).
In contrast, when the E-DCH active set control unit 311 generates an update event about update of the E-DCH active set, the transmission control unit transmits an update instruction to update the E-DCH active set (an update instruction for a deletion instruction) to the non-serving base station 23 at the same time when it transmits an update instruction to update the E-DCH active set (an update instruction for an addition instruction) to the DCH active set base station 24 (step ST42).
In Fig. 10, the non-serving base station 23 which is to be deleted from the E-DCH active set is not illustrated for the sake of simplicity of the drawing.

When receiving the addition instruction to add the base station to the E-DCH active set or an update instruction to update the E-DCH active set from the base station control apparatus 25, the DCH active set base station 24 carries out an adding process of adding itself to the E-DCH active set (step ST43).
After carrying out the adding process of adding itself to the E-DCH active set, the DCH active set base station 24 notifies the completion of the adding process to the base station control apparatus 25 (step ST44).
When receiving the update instruction to update the E-DCH active set from the base station control apparatus 25, the non-serving base station 23 carries out a deleting process of deleting itself from the E-DCH active set.
After carrying out the deleting process of deleting itself from the E-DCH active set, the non-serving base station 23 notifies the completion of the deleting process to the base station control apparatus 25.

When receiving the notification of the completion of the adding process from the DCH active set base station 24 which is added to the E-DCH active set, the transmission control unit 302 of the base station control apparatus 25 transmits an addition instruction to add the base station to the E-DCH active set or an update instruction to update the E-DCH active set to the mobile terminal 21 via the base stations (steps ST45 and ST46).

When the P-CCPCH receiving unit 121 receives the addition instruction to add the base station to the E-DCH active set or an update instruction to update the E-DCH active set from the base station control apparatus 25, the E-DCH active set management unit 124 of the mobile terminal 21 updates the current active set according to an instruction from the E-DCH active set control unit 126 (step ST47).
After the E-DCH active set management unit 124 carries out the process of adding the base station to the E-DCH active set or updating the E-DCH active set, the protocol processing unit 130 of the mobile terminal 21 notifies the completion of the adding process or the updating process to the base station control apparatus 25 (step ST48).

As can be seen from the above description, in accordance with this Embodiment 1, a plurality of possible values are made available for the maximum number of non-serving base stations which are selected by the base station control apparatus 25, and out of the plurality of possible values made available for the maximum number of non-serving base stations a value for the maximum value is selected and set according to the capability of the mobile terminal 21. Therefore, in a case in which the mobile terminal 21 is, for example, a mobile terminal B with a low transmission rate advantages such an advantage as reduction in the circuit size of the receive circuit of the mobile terminal 21 are obtained.

Hereafter, advantages of this Embodiment 1 will be explained concretely.
First, advantages of the mobile terminal 21 will be explained.
Because one of the plurality of possible values made available the maximum number of non-serving base stations which is to be applied to the mobile terminal 21 is selected and set up selectively according to the capability of the mobile terminal 21, and is stored in the storage unit 129, in a case in which the mobile terminal 21 is, for example, a low-capability mobile terminal B (a mobile terminal with a low maximum transmission rate at which data can be transmitted), there is an advantage of not requiring to mount the hardware for reception of the Down command (e.g., the E-RGCH receiving units 119, the RAKE combining units 206, and the decoding units 207) on the same scale as that of a high-capability mobile terminal A (a mobile terminal with a high maximum transmission rate at which data can be transmitted).

There is a further advantage of not requiring to mount the hardware (the E-HICH receiving unit 127) for reception of ACK/NACK information showing whether E-DCH data have been received from each of the base stations 22, 23, and 24 on the same scale as that of a high-capability mobile terminal A.
More specifically, there is provided an advantage of being able to reduce the hardware, such as the E-RGCH receiving units 119 and the E-HICH receiving unit 127, in a case in which the mobile terminal 21 is a low-capability mobile terminal B.

Because a high-capability mobile terminal A can carry out transmission at a high rate, the number of non-serving base stations which needs to be taken into consideration with respect to the influence upon the interference margin generally increases as compared with a low-capability mobile terminal B.
In this Embodiment 1, because a plurality of possible values for the maximum number of base stations in the E-DCH active set are made available in the mobile communication system, as usual a non-serving base station in which the amount of interference from high-capability mobile terminals A exceeds its permissible amount can control the transmission power of data transmitted from each mobile terminal A, and it is therefore possible to solve the problem without worsening the interference to the non-serving base station, caused by uplink transmission.

Next, advantages of the whole mobile communication system will be explained.
In addition to the advantage of being able to reduce the hardware of the E-RGCH receiving units 119 and the E-HICH receiving unit 127 in the mobile terminal 21, there are provided advantages, such as reduction in assignment of codes, the transmission power, etc. in a non-serving base station, reduction in the E-DCH receiving processing in a non-serving base station, reduction in the traffic of received E-DCH data transmitted from a non-serving base station to the base station control apparatus 25.

### Embodiment 2

In above-mentioned Embodiment 1, the maximum number of non-serving base stations is set up, selected according to the capability of the mobile terminal 21, out of a plurality of possible values of the maximum number of non-serving base stations, as previously mentioned. In this Embodiment 2, a method of setting up this maximum number will be explained concretely.

In the technical specification of 3GPP (3rd Generation Partnership Project), it is granted as the capabilities (UE Capabilities) of mobile terminals the existence of a low-capability mobile terminal B which cannot transmit data at a high transmission rate has been confirmed.

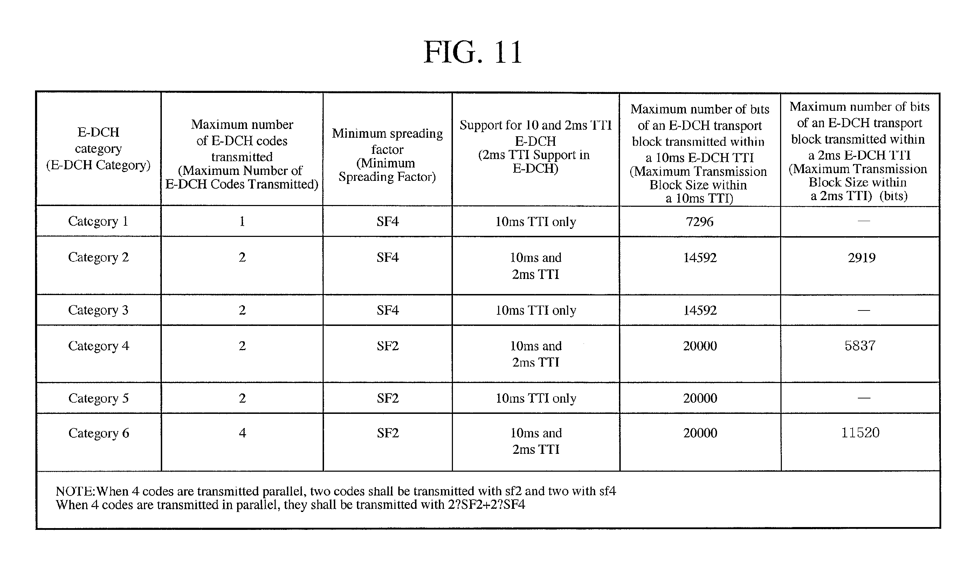

Fig. 11 is an explanatory drawing showing the capability (UE Capabilities) of a mobile terminal associated with the E-DCH, which is standardized in the technical specification of 3GPP, and, in the figure, a TTI stands for "Transmission Timing Interval."

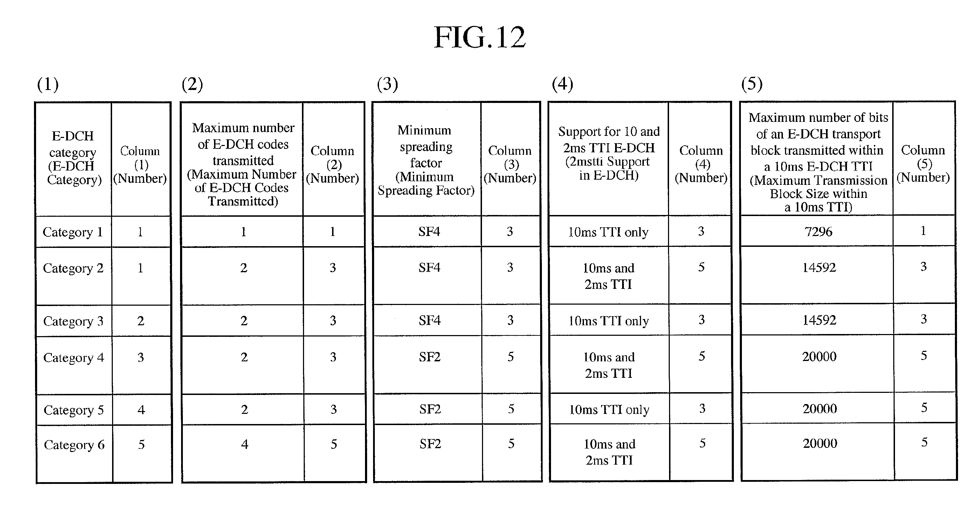

Fig. 12 is an explanatory drawing showing an example of a correspondence between parts of the Capabilities information and a plurality of possible values of the maximum number of base stations in the E-DCH active set.

As explained in above-mentioned Embodiment 1, it is desirable that in general a high-capability mobile terminal A has a larger maximum number of base stations in the E-DCH active set while a low-capability mobile terminal B has a smaller maximum number of base stations in the E-DCH active set.
Although a concrete numerical value range of the maximum number of base stations in the E-DCH active set is not limited, it is generally considered that the maximum number of base stations in the E-DCH active set falls within a range of 6 or less and it can be considered that in a case in which the maximum number of base stations in the E-DCH active set is small, it is about three to four, whereas in a case in which the maximum number is larger, it is about five to six.

(1) It can be considered, as a direct notification method, that the mobile terminal 21 holds the maximum number of base stations in the E-DCH active set, and notifies the maximum number to the base station control apparatus 25.
As a concrete notification method, the mobile terminal uses a method of notifying the maximum number to the base station control apparatus 25 by sending out a layer-3 message by a protocol called RRC (Radio Resource Control).
Because this can be specified independent of the conventional UE Capabilities definition, there is an advantage of providing a high degree flexibility for the settings.

(2) It can be considered that, as an indirect notification method of associating the maximum number with the UE Capabilities related to the E-DCH, the mobile terminal 21 holds the Capabilities information and notifies the Capabilities information to the base station control apparatus 25.
Five examples of a concrete method of associating the maximum number of base stations in the E-DCH active set with the UE Capabilities will be shown below. In either of these examples, because information which the base station control apparatus 25 has to signal is only a category number and the actual maximum number of base stations in the E-DCH active set can be derived if the category number is known, there is an advantage of being able to reduce the amount of signalings.

As a first example, a method of using, as a key, the "category" of the Capabilities information so as to set up the maximum number of base stations in the E-DCH active set can be considered.
The category means a group, and generally, the capability of the mobile terminal 21 becomes a higher as the number of categories increases.
Therefore, a larger maximum number is assigned to a mobile terminal having a larger number of categories (refer to Fig. 12(1)).

In Fig. 12(1), a case in which "1" is assigned to Category 1, "1" is assigned to Category2, "2" is assigned to Category3, "3" is assigned to Category4, and "4" is assigned to Category5 is shown. This is only an example, and, with respect to categories, a larger maximum number of base stations in the E-DCH active set is assigned to a mobile station with a higher maximum transmission rate, whereas a smaller maximum number of base stations in the E-DCH active set is assigned to a mobile station with a lower maximum transmission rate.

As a second example, a method of using, as a key, a maximum transmission number of physical channels via which data can be transmitted (i.e., a maximum number of E-DCH codes: Maximum number of E-DCH codes transmitted) so as to set up the maximum number of base stations in the E-DCH active set can be considered.
The codes denote channelization codes which are spreading codes for channel separation.
Using a plurality of channelization codes in order to transmit E-DCH data means simultaneously using a plurality of physical channels for E-DCH, and this state is called multicode.

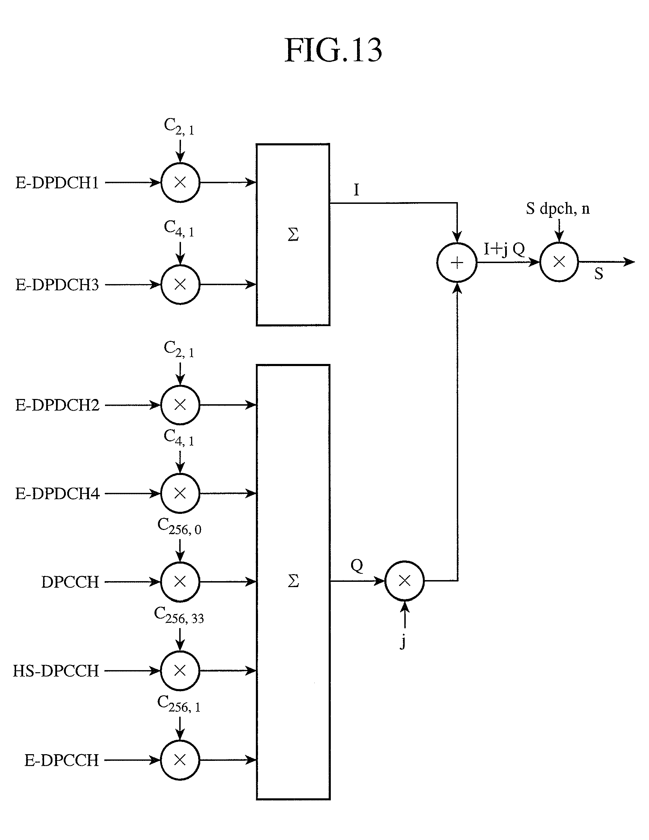

Fig. 13 is a detailed block diagram showing the modulating unit 112 of the mobile terminal 21 at a time of multicode. Fig. 13 illustrates a case in which the category of Fig. 11 is "6."
It is generally said that a mobile terminal having a larger number of multiple codes (physical channels via which data are transmitted simultaneously) has a higher capability with respect to transmission of E-DCH data.
Therefore, a larger maximum number is assigned to a mobile terminal having a larger maximum transmission number of physical channels (refer to Fig. 12(2)).

Assigned numbers as shown in Fig. 12(2) are only examples, and, with respect to the maximum transmission number of physical channels, a larger maximum number of base stations in the E-DCH active set is assigned to a mobile station having a larger scale of hardware, whereas a smaller maximum number of base stations in the E-DCH active set is assigned to a mobile station having a smaller scale of hardware.

As a third example, a method of using, as a key, a minimum spreading factor(MSF: Minimum spreading factor) which can be transmitted so as to set up the maximum number of base stations in the E-DCH active set can be considered.
The spreading factor SF is a coefficient showing how many chips one symbol is spread into.
The number of chips which can be transmitted per second depends on the chip rate, and is a fixed value. The chip rate in current W-CDMA systems is 3.84 MHz. That is, the number of chips which can be transmitted per second is 3.84 Mchip/s.
The smaller spreading factor SF the mobile terminal has, the larger number of symbols can be transmitted during 1 second.
Furthermore, the smaller the spreading factor SF is, the mobile terminal will be unable to obtain gain, and therefore the mobile terminal will need more transmission power.
As a result, it can be said that the smaller spreading factor SF the mobile terminal supports, the higher capability the mobile terminal has in regards to transmitting via the E-DCH.
Therefore, a larger maximum number is assigned to a mobile terminal which can transmit data with a smaller spreading factor SF (refer to Fig. 12(3)).

Assigned numbers as shown in Fig. 12(3) are only examples, and, with respect to the minimum spreading factor which can be transmitted, a larger maximum number of base stations in the E-DCH active set is assigned to a mobile terminal with a higher maximum transmission rate, whereas a smaller maximum number of base stations in the E-DCH active set is assigned to a mobile terminal with a lower maximum transmission rate. In addition, a larger maximum number of base stations in the E-DCH active set is assigned to a mobile terminal with a larger scale of hardware, whereas a smaller maximum number of base stations in the E-DCH active set is assigned to a mobile terminal with a smaller scale of hardware.

As a fourth example, a method of using, as a key, a TTI length of E-DCH so as to set up the maximum number of base stations in the E-DCH active set, can be considered.
A TTI stands for "Transmission Timing Interval."
First, the TTI length of E-DCH is considered. 2 ms TTI is not supported in the technical specifications of 3GPP R'99 (the technical specifications which have been presented before the standardizing of E-DCH). That is, it can be said that a mobile terminal which can afford to support 2 ms TTI at a time of addition of an E-DCH function (for example, the mobile terminal has an adequate margin for hardware mounting) is a high-capability mobile terminal.
Although 10 ms TTI enables all mobile terminals to carry out transmission, 2 ms TTI is supported only by high-capability mobile terminals.
Therefore, if a mobile terminal supports 2 ms TTI, it can be regarded as a high-capability mobile terminal and the maximum number of base stations in the E-DCH active set is set to a large number, whereas if a mobile terminal does not support 2 ms TTI, it can be regarded as a low-capability mobile terminal and the maximum number of base stations in the E-DCH active set is set to a small number (refer to Fig. 12(4)).
In addition, for DCH (the technical specifications of 3GPP R'99), the concept regarding the relationship between the TTI length and the capability of the mobile terminal is contrary to that mentioned above, and because the longer TTI length the mobile terminal has, larger the amount of need memory, it can be considered that the longer TTI length the mobile terminal has, the higher capability the mobile terminal has.
Another concept can be provided. Assuming that each mobile terminal transmits the same amount of data, it can be said that the peak rate in a case in which the TTI length is 2 ms is higher than that in a case in which the TTI length is 10 ms. Therefore, if a mobile terminal supports 2 ms TTI, it can be regarded as a high-capability mobile terminal and the maximum number of base stations in the E-DCH active set is set to a large number, whereas if a mobile terminal does not support 2 ms TTI, it can be regarded as a low-capability mobile terminal and the maximum number of base stations in the E-DCH active set is set to a small number (refer to Fig. 12(4)). Assigned numbers as shown in Fig. 12(4) are only examples, and, with respect to the TTI length of E-DCH, a larger maximum number of base stations in the E-DCH active set is assigned to a mobile terminal with a higher maximum transmission rate, whereas a smaller maximum number of base stations in the E-DCH active set is assigned to a mobile terminal with a lower maximum transmission rate.

Assigned numbers as shown in Fig. 12(4) are only examples, and, with respect to the TTI length of E-DCH, a larger maximum number of base stations in the E-DCH active set is assigned to a mobile terminal with a larger scale of hardware, whereas a smaller maximum number of base stations in the E-DCH active set is assigned to a mobile terminal with a smaller scale of hardware.

As a fifth example, a method of using, as a key, a transport block size (the size of units in which data are transmitted) to set up the maximum number of base stations in the E-DCH active set can be considered.
Because a large maximum transport block size indicates a high processing capability, a mobile terminal having a large maximum transport block size is regarded as a high-capability mobile terminal and a larger maximum number of base stations in the E-DCH active set is assigned to mobile terminals having a larger maximum transport block size (refer to Fig. 12(5)).

Assigned numbers as shown in Fig. 12(5) are only examples, and, with respect to the transport block size, a larger maximum number of base stations in the E-DCH active set is assigned to a mobile terminal with a higher maximum transmission rate, whereas a smaller maximum number of base stations in the E-DCH active set is assigned to a mobile terminal with a lower maximum transmission rate. Furthermore, a larger maximum number of base stations in the E-DCH active set is assigned to a mobile terminal with a larger scale of hardware, whereas a smaller maximum number of base stations in the E-DCH active set is assigned to a mobile terminal with a smaller scale of hardware.

The first through fifth examples are only examples, and the maximum number of base stations in the E-DCH active set can be set up in such a manner as to be associated with other Capabilities information related to the E-DCH.
The values of the maximum number of base stations in the E-DCH active set which are specified in each of the first through fifth examples are values taken as an examples, and may differ from actual values.

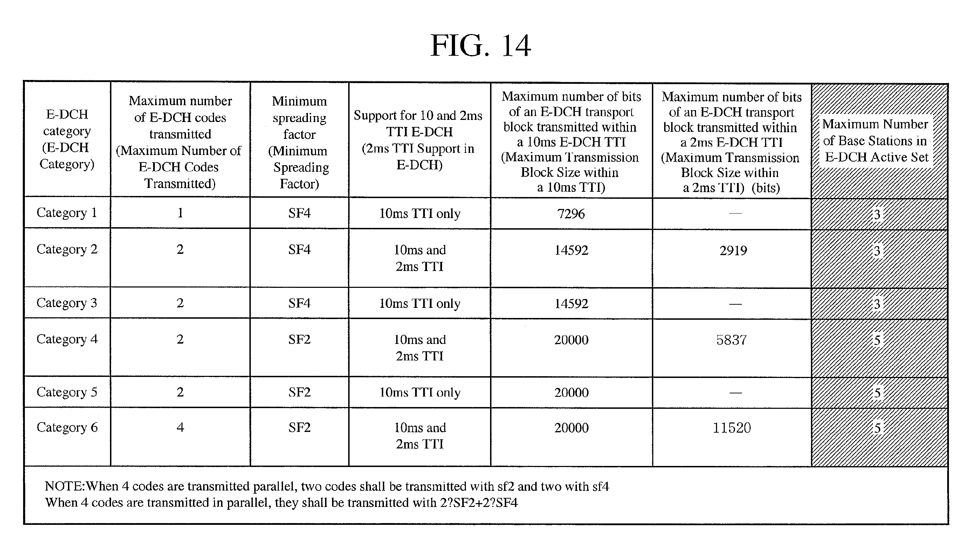

Fig. 14 is an explanatory drawing showing a Capabilities estimation table about the E-DCH in the case in which the mobile communication system makes available a plurality of possible values of the maximum number of base stations in the E-DCH active set.
In the example of Fig. 14, the same values as those shown in Fig. 12(3) are listed in the column showing the maximum number of base stations in the E-DCH active set shown on the right edge of the table, though the values shown in (1), (2), (4), or (5) of Fig. 12 or other values can be listed in the column.

(3) As an un-explicit notification method of associating the maximum number of base stations in the E-DCH active set with the UE Capabilities shown in 3GPP R'99, there is a method of determining the number in advance without specially carrying out any signaling.
According to this method, by referring to other information which enables judgment of whether a mobile station has a high capability, the maximum number of base stations in the E-DCH active set is set up uniquely from the information.
As an indicator showing whether a mobile station has a high capability, "UE Power Class" indicating the maximum available transmission power of the mobile terminal, a receivable maximum TTI length, or the like can be considered. As "UE Power Class" becomes higher, the maximum transmission power becomes higher. Therefore, when a mobile station is categorized into a high "UE Power Class", it is regarded as a high-capability mobile terminal and its maximum number of base stations in the E-DCH active set is set to a large number, whereas when a mobile station is categorized into low "UE Power Class", it is regarded as a low-capability mobile terminal and its maximum number of base stations in the E-DCH active set is set to a small number. Furthermore, the size of memory used for reception increases with the increase in the maximum length of TTI at which a mobile terminal can carry out reception. Therefore, when a mobile station has a large maximum length of TTI at which it can carry out reception, it is regarded as a high-capability mobile terminal and its maximum number of base stations in the E-DCH active set is set to a large number, whereas when a mobile station has a small maximum length of TTI at which it can carry out reception, it is regarded as a low-capability mobile terminal and its maximum number of base stations in the E-DCH active set is set to a small number. In this case, there is provided an advantage of being able to improve compatibility, because the function of signaling is used as before and there is no new additional signaling.

### Embodiment 3

In this Embodiment 3, variants 1 and 2 of above-mentioned Embodiment 1 will be explained.
In variant 1, the following situation is assumed.
That is, a case is assumed in which the number of assigned downlink codes, the transmission power, and so on are insufficient in a non-serving base station 23, and it is therefore desirable to save on the downlink channels via which data are transmitted.
Furthermore, it is assumed that because the transmission line has wide fluctuations and therefore the occurrence of reception errors of E-DCH becomes more frequent in a serving base station 22, a request to improve the macro diversity effect is issued in the mobile communication system.
In addition, it is assumed that in a non-serving base station 23, the interference margin is sufficient and therefore it is not necessary to transmit the Down command to the mobile terminal 21.

In the above-mentioned situation, a mobile communication system can be considered in which some non-serving base stations 23 included in the E-DCH active set receive E-DCH data transmitted from the mobile terminal 21, but do not transmit the Down command.
In this case, the hardware of the E-RGCH receiving unit 119 in the mobile terminal 21 can be reduced.
Furthermore, the number assigned of downlink codes, the transmission power, and so on in each non-serving base station 23 can be reduced in the whole mobile communication system.

Next, in variant 2, the following situation is assumed.
That is, a case is assumed in which the number of assigned downlink codes assigned, the transmission power, and so on are insufficient in a non-serving base station 23, and it is therefore desirable to save on the downlink channels via which data are transmitted.
Furthermore, it is assumed that because the transmission line is stable and therefore the occurrence of reception errors of E-DCH is less frequent in a serving base station 22, the macro diversity effect is not necessarily needed in the mobile communication system.
In addition, it is assumed that because there are a lot of terminals for which the non-serving base station 23 needs to take the amount of interference into consideration or because a mobile terminal for which the non-serving base station 23 needs to take the amount of interference into consideration has a high transmission rate, the non-serving base station 23 does not have a sufficient interference margin, and therefore needs to transmit the Down command to the mobile terminal 21.

In the above-mentioned situation, a mobile communication system can be considered in which some non-serving base stations 23 included in the E-DCH active set do not receive E-DCH data transmitted from the mobile terminal 21, but do transmit the Down command.
In this case, the hardware of the E-HICH receiving unit 127 in the mobile terminal 21 can be reduced.
Furthermore, there are advantages obtained such as reduction in the assignment of codes, reduction in the transmission power, etc. in each non-serving base station 23; reduction in the E-DCH receiving processing in each non-serving base station 23; and reduction in the traffic of received E-DCH data transmitted from each non-serving base station 23 to the base station control apparatus 25.

### Industrial Applicability

As mentioned above, the mobile communication system in accordance with the present invention is suitable for applications for which reduction in the hardware size of mobile terminals, such as mobile phones, is highly required.

## Claims

1. A mobile communication system including a plurality of base stations each of which carries out macro diversity reception of data transmitted from a mobile terminal, and a base station control apparatus which selects a non-serving base station having a control function of controlling power of transmission of data in the mobile terminal from the plurality of base stations, **characterized in that** a maximum number of non-serving base stations which can be selected by the base station control apparatus is set up according to a capability of the mobile terminal.

2. A mobile communication system including a plurality of base stations each of which carries out macro diversity reception of data transmitted from a mobile terminal, and a base station control apparatus which selects a non-serving base station having a control function of controlling power of transmission of data in the mobile terminal from the plurality of base stations, **characterized in that** a plurality of possible values for a maximum number of non-serving base stations which can be selected by the base station control apparatus are made available.

3. The mobile communication system according to claim 2,
**characterized in that** a maximum number is set up from among the provided plurality of possible values for the maximum number of non-serving base stations according to a capability of the mobile terminal.

4. The mobile communication system according to claim 3,
**characterized in that** the maximum number of non-serving base stations is beforehand set up according to the capability of the mobile terminal, and the mobile terminal notifies the maximum number set up beforehand to the base station control apparatus.

5. The mobile communication system according to claim 3,
**characterized in that** the base station control apparatus grasps the capability of the mobile terminal, and sets up the maximum number of non-serving base stations according to the capability of the mobile terminal.

6. The mobile communication system according to claim 5,
**characterized in that** the mobile terminal notifies capability information showing the capability thereof to the base station control apparatus, and the base station control apparatus grasps the capability of the mobile terminal from the capability information.

7. A base station control apparatus comprising:
maximum number acquiring means for acquiring a maximum number of non-serving base stations from a mobile terminal in a case in which the maximum number of non-serving base stations each having a control function of controlling power of transmission of data in the mobile terminal is set up in the mobile terminal; and
non-serving base station selecting means for selecting a non-serving base station from a plurality of base stations which carry out macro diversity reception of data transmitted from the mobile terminal while using, as an upper limit, the maximum number acquired by the maximum number acquiring means.

8. A base station control apparatus comprising:
capability grasp means for grasping a capability of a mobile terminal;
a maximum number setting means for, in a case in when a plurality of possible values of a maximum number of non-serving base stations each having a control function of controlling power of transmission of data in the mobile terminal are made available, setting up the maximum number of
non-serving base stations selectively from among the plurality of possible values of the maximum number of non-serving base stations according to the capability grasped by the capability grasp means; and
non-serving base station selecting means for selecting a non-serving base station from a plurality of base stations which carry out macro diversity reception of data transmitted from the mobile terminal while using, as an upper limit, the maximum number acquired by the maximum number acquiring means.

9. The base station control apparatus according to claim 8,
**characterized in that** the capability grasp means acquire capability information showing the capability of the mobile terminal from the mobile terminal so as to grasp the capability of the mobile terminal from the capability information.

10. A mobile terminal comprising:
maximum number storage means for storing a maximum number of
non-serving base stations each having a control function of controlling power of transmission of data in a case in which the maximum number of
non-serving base stations is set up in advance according to a capability of the mobile terminal;
maximum number notifying means for notifying the maximum number of non-serving base stations stored in the maximum number storage means to a base station control apparatus; and
power adjusting means equipped with receiving circuits whose number is equal to the maximum number of non-serving base stations stored in the maximum number storage means, for adjusting the power of transmission of data according to a control signal when the receiving circuits receive the control signal for control of the transmission power from a non-serving base station selected by the base station control apparatus.

11. The mobile terminal according to claim 10,
**characterized in that** the mobile terminal includes an addition/update request means for, in a case in which a current number of non-serving base stations is smaller than the maximum number of non-serving base stations stored in the maximum number storage means, transmitting a request for addition of a non-serving base station to the base station control apparatus, and for, in a case in which the current number of non-serving base stations is equal to or larger than the maximum number of non-serving base stations stored in the maximum number storage means, transmitting a request for update of non-serving base stations to the base station control apparatus.

12. A mobile terminal comprising:
maximum number storage means for storing a maximum number of non-serving base stations each having a control function of controlling power of transmission of data in a case in which the maximum number of non-serving base stations is set up in advance according to a capability of the mobile terminal;
capability notifying means for notifying capability information showing a capability of the mobile terminal to a base station control apparatus; and
power adjusting means equipped with receiving circuits whose number is equal to the maximum number of non-serving base stations stored in the maximum number storage means, for adjusting the power of transmission of data according to a control signal when the receiving circuits receive the control signal for control of the transmission power from a non-serving base station selected by the base station control apparatus.

13. The mobile terminal according to claim 12,
**characterized in that** the mobile terminal includes addition/update request means for, in a case in which a current number of non-serving base stations is smaller than the maximum number of non-serving base stations stored in the maximum number storage means, transmitting a request for addition of a non-serving base station to the base station control apparatus, and for, in a case in which the current number of non-serving base stations is equal to or larger than the maximum number of non-serving base stations stored in the maximum number storage means, transmitting a request for update of non-serving base stations to the base station control apparatus.
